# EUROPÄISCHE PATENTSCHRIFT

(11) **EP 3 895 532 B1**
(45) Veröffentlichungstag und Bekanntmachung des Hinweises auf die Patenterteilung: **23.08.2023**
(21) Anmeldenummer: 21157528.7
(22) Anmeldetag: 17.02.2021
(51) Int. Cl.: A01M 7/00, A01M 9/00

(54) **SYSTEM FÜR EINE LANDWIRTSCHAFTLICHE ARBEITSMASCHINE, VERFAHREN ZUM ERMITTELN EINER POSITION VON ARBEITSELEMENTEN SOWIE LANDWIRTSCHAFTLICHE ARBEITSMASCHINE**
AGRICULTURAL WORKING MACHINE, SYSTEM FOR AN AGRICULTURAL WORKING MACHINE AND METHOD FOR DETERMINING A POSITION OF WORKING ELEMENTS
SYSTÈME POUR UNE MACHINE AGRICOLE DE TRAVAIL, PROCÉDÉ DE DÉTERMINATION D'UNE POSITION DES ÉLÉMENTS DE TRAVAIL, AINSI QUE MACHINE AGRICOLE DE TRAVAIL

(30) Priorität: 16.04.2020 DE 102020110367
(43) Veröffentlichungstag der Anmeldung: 20.10.2021
(73) Patentinhaber: HORSCH LEEB Application Systems GmbH, 94405 Landau an der Isar (DE)
(72) Erfinder: Leeb, Theodor, 94405 Landau an der Isar (DE); Zink, Florian, 94405 Landau an der Isar (DE)
(74) Vertreter: v. Bezold & Partner Patentanwälte - PartG mbB

(56) Entgegenhaltungen:
- EP-A1- 3 141 114
- EP-A1- 3 469 898
- US-A1- 2011 153 168
- US-A1- 2019 311 198

## Beschreibung

Die Erfindung betrifft ein System für eine landwirtschaftliche Arbeitsmaschine. Die Erfindung betrifft zudem ein Verfahren zum Ermitteln einer Position von Arbeitselementen an einer landwirtschaftlichen Arbeitsmaschine. Darüber hinaus betrifft die Erfindung eine landwirtschaftliche Arbeitsmaschine.

Aus dem Stand der Technik ist es bekannt, dass zur gleichmäßigen Verteilung flüssiger und/oder fester landwirtschaftlicher Verteilgüter landwirtschaftliche Verteilsysteme respektive landwirtschaftliche Arbeitsmaschinen, vorzugsweise Feldspritzen und/oder Düngerstreuer eingesetzt werden. Derartige Feldspritzen und/oder Düngerstreuer weisen zur Erreichung einer möglichst großen Schlagkraft, ein sich in großer Breite quer zur Fahrrichtung erstreckendes Gestänge, vorzugsweise Verteilgestänge bzw. Spritzgestänge auf. Am Verteilgestänge sind zur Verteilung landwirtschaftlicher Verteilgüter, wie bspw. Spritzmittel, jeweils mit einem Vorratstank verbundene Arbeitselemente wie bspw. Spritzdüsen, Prallelemente oder dergl. angebracht.

Eine landwirtschaftliche Arbeitsmaschine in Form einer Feldspritze wurde bspw. bereits bekannt durch die WO 2012 032 245 A1. Beschrieben ist hierbei ein System für eine landwirtschaftliche Feldspritze, deren Gestänge mit einer Mehrzahl von durch Verteilelementen (z.B. Spritzdüsen) gebildeten Arbeitselementen ausgestattet ist. Die Ansteuerung der Verteilelemente erfolgt in Abhängigkeit von für die Kartographie der zu behandelnden Pflanzen repräsentativen Daten. Somit wird jeweils definiert an welcher Position einer Ackerfläche eine Verteilung von landwirtschaftlichem Verteilgut erfolgt und an welcher nicht, sowie welche Mengen an Verteilgut ausgebracht werden sollen, insbesondere kann somit die Arbeitsweise der Arbeitselemente definiert werden.

Nachteilig an dem aus dem Stand der Technik bekanntem System ist jedoch, dass dieses eine konstant bleibende Position der Arbeitselemente gegenüber einem Positionsbestimmungssystem (z.B. einem Referenzpunkt) voraussetzt. Dies ist jedoch durch verschiedene Höhenlagen des Gestänges und durch Schwingungen (z.B. Schwenklagen) des Gestänges in oder gegen die Fahrrichtung vor allem bei großen Arbeitsbreiten nicht der Fall, so dass gewünschte Positionen auf einer Ackerfläche mitunter nicht exakt eingehalten, d.h. bearbeitet werden können.

Dieses Problem tritt zudem verstärkt auf, wenn eine Position von Pflanzen auf einer Ackerfläche durch Sensoren definiert wurde, welche nicht fest mit dem Gestänge oder der Arbeitsmaschine verbunden sind, da es somit wiederum zu Abweichungen der tatsächlichen Position der Arbeitselemente gegenüber den Pflanzen kommen kann, d.h. wurde bspw. eine Position von Pflanzen nicht mit an der Arbeitsmaschine angebauten Sensoren erfasst und wurden diese Positionen an ein mit der Arbeitsmaschine verbundenes Positionsbestimmungssystem übertragen konnte es durch die verschiedenen Höhenlagen und Schwenklagen des Gestänge vorkommen, dass eine tatsächliche Position von am Gestänge angebrachten Arbeitselementen nicht exakt ermittelt werden konnte und somit eine exakte Position von Pflanzen mit den Arbeitselementen nicht eingehalten, d.h. erreicht, werden konnte.

Dokument US 2011/153168 A1 offenbart ein System zum Bereitstellen eines Höhenänderungsbefehls für ein Arbeitsgerät an einem landwirtschaftlichen Fahrzeug. Das System umfasst ein Höhensteuermodul, das dazu konfiguriert ist, mit einem Computer zu interagieren, topografische Daten zu empfangen, eine virtuelle Feldkarte basierend auf den topografischen Daten bereitzustellen, ein Vorwärtssichtpolygon für das Arbeitsgerät basierend auf der virtuellen Feldkarte bereitzustellen, und einen Höhenänderungsbefehl für das Arbeitsgerät basierend auf dem Vorwärtssichtpolygon bereitzustellen. Das System umfasst ferner eine Arbeitsgerät-Steuereinheit, die dazu konfiguriert ist, den Höhenänderungsbefehl zu empfangen und die Bewegung des Arbeitsgeräts zu steuern.

Dokument EP 3 141 114 B1 offenbart eine Flächenausbringanordnung an einem Fahrzeug, z. B. eine selbstfahrende oder gezogene Feldspritze, mit einer Vielzahl von nebeneinander an einem senkrecht zur Arbeitsrichtung vorgesehenen Gestänge angeordneten Ausbringanordnungen. Das Gestänge ist in wenigstens drei Gestängeabschnitte unterteilt und über eine Pendelvorrichtung mit dem Fahrzeug verbunden, wobei die Pendelvorrichtung ein und eine Lagerung des Pendels in einem ersten Drehpunkt aufweist. Das Pendel lässt sich senkrecht zur Arbeitsrichtung verstellen, auslenken und/oder auspendeln. Das Pendel weist einen zweiten Drehpunkt mit einer Lagerung und Aufnahme für einen Hauptgestängerahmen der Gestängeabschnitte auf, wobei sich der Hauptgestängerahmen senkrecht zur Arbeitsrichtung verstellen, auslenken und/oder auspendeln lässt.

Dokument EP 3 469 898 A1 offenbart eine landwirtschaftliche Verteilmaschine mit einem Rahmen, einem oder mehreren Vorratsbehältern, sowie einer Verteilvorrichtung zum Ausbringen von Flüssigkeiten und/oder körnigen oder granulierten Stoffen. Die Verteilvorrichtung ist beweglich am Rahmen angeordnet. Die Verteilmaschine umfasst zudem ein wenigstens zwei Räder aufweisendes Fahrwerk und/oder eine Zugvorrichtung, wobei die Räder und/oder die Zugvorrichtung über aufrechte Achsen schwenkbar bzw. lenkbar zum Rahmen angeordnet sind. Zum Verschwenken bzw. zum Lenken der Räder und/oder der Zugvorrichtung dient ein von einer elektronischen Regeleinrichtung ansteuerbares motorisches Stellglied, wobei dem Fahrwerk und/oder den aufrechten Achsen und/oder dem zumindest einen Stellglied Sensoren zur Erfassung und Weiterleitung eines Istwertes bzgl. der Ausrichtung dieser zugeordnet ist.

Aufgabe der Erfindung ist es somit, eine Möglichkeit zu schaffen, eine exakte Position von Arbeitselementen an einer landwirtschaftlichen Arbeitsmaschine, insbesondere an einem Gestänge einer landwirtschaftlichen Arbeitsmaschine, zu ermitteln.

Diese Aufgabe wird gelöst durch ein System für eine landwirtschaftliche Arbeitsmaschine, mit den Merkmalen des unabhängigen Anspruch 1, durch ein Verfahren zum Ermitteln einer Position von Arbeitselementen, mit den Merkmalen des Verfahrensanspruch 15, sowie durch eine landwirtschaftliche Arbeitsmaschine mit den Merkmalen des Anspruch 17. Vorteilhafte Ausführungsformen und Weiterbildungen der Erfindung sind in den Ansprüchen und der folgenden Beschreibung unter teilweiser Bezugnahme auf die Figuren offenbart.

Die Erfindung betrifft ein System für eine landwirtschaftliche Arbeitsmaschine.

Das System, respektive die Arbeitsmaschine, umfasst ein Komponenten der Arbeitsmaschine tragendes Chassis.

Das erfindungsgemäße System, respektive die Arbeitsmaschine, umfasst zudem ein, gegenüber dem Chassis höhenverstellbar am Chassis gelagertes und sich in großer Arbeitsbreite (z.B. 24 Meter, 30 Meter oder mehr) quer zur Fahrtrichtung erstreckendes Gestänge, vorzugsweise Verteilgestänge (z.B. Spritzgestänge), mit einer Mehrzahl von an diesem beabstandet zueinander angeordneten Arbeitselementen.

Das System, respektive die Arbeitsmaschine, umfasst zudem eine Datenverarbeitungseinrichtung (z.B. Steuerungs- und/oder Regelungseinrichtung, Rechnereinheit und/oder dergl.).

Darüber hinaus umfasst das System, respektive die Arbeitsmaschine, eine Erfassungseinrichtung, welche dazu eingerichtet ist, eine Schwenklage des Gestänge in Fahrtrichtung gegenüber (z.B. in Bezug zu) einem Referenzpunkt (welcher bspw. dem Chassis oder dem Gestänge zugeordnet ist), zu erfassen.

Um eine Möglichkeit zu schaffen, eine exakte Position von Arbeitselementen an einer landwirtschaftlichen Arbeitsmaschine, vorzugsweise an einem Gestänge zu ermitteln, um somit insbesondere eine Position der Arbeitselemente auf einer Ackerfläche (z.B. im Raum) zu definieren, um somit bspw. die Verteilung landwirtschaftlicher Verteilgüter und/oder die Arbeitsweise der Arbeitselemente zu verbessern, ist erfindungsgemäß vorgesehen, dass die Datenverarbeitungseinrichtung dazu eingerichtet ist, anhand der Schwenklage eine Position der Arbeitselemente gegenüber dem Referenzpunkt (z.B. gegenüber dem Chassis) zu ermitteln.

Infolge der Erfindungsgemäßen Maßnahmen, wird demnach ein System, respektive eine landwirtschaftliche Arbeitsmaschine geschaffen, bei welchem kontinuierlich die exakte Position von Arbeitselementen ermittelt wird und somit bspw. die Verteilung von landwirtschaftlichen Verteilgütern, auch bei bspw. verschiedenen Höhenlagen und/oder Schwenklagen des Gestänge (z.B. Verteilgestänge, Spritzgestänge), mit den Arbeitselementen (z.B. Verteilelementen) an den erforderlichen Positionen auf einer Ackerfläche, d.h. auf einem Pflanzenbestand erfolgt. Insbesondere kann somit eine, auf bspw. Kartographischen Daten (z.B. Ackerschlagkartei) basierte Verteilung landwirtschaftlicher Verteilgüter deutlich verbessert werden, da zu jedem Zeitpunkt (z.B. in Echtzeit) die exakte Position der durch Verteilelemente gebildeten Arbeitselemente auf einer Ackerfläche definiert werden kann, d.h. zu jedem Zeitpunkt die exakte Position der Arbeitselemente auf einer Ackerfläche (z.B. im Raum) bekannt ist, insbesondere auch gegenüber Pflanzen bekannt ist.

Gemäß einer bevorzugten Ausführungsvariante einer erfindungsgemäßen Arbeitsmaschine kann vorgesehen sein, dass die Arbeitsmaschine zum Verteilen von flüssigen und/oder festen landwirtschaftlichen Verteilgütern ausgebildet ist, vorzugsweise eine Feldspritze oder ein Düngerstreuer (z.B. pneumatischer Düngerstreuer) ist, wobei die Arbeitselemente mit einem Vorratsbehälter für mindestens ein landwirtschaftliches Verteilgut wirkverbunden und/oder wirkverbindbar (z.B. fluidisch verbunden) sind und als Verteilelemente, vorzugsweise Spritzdüsen oder Prallelemente, ausgebildet sind.

Auch andere Arten von landwirtschaftlichen Arbeitsmaschinen wären denkbar und vorstellbar bei welchem die vorliegende Erfindung zum Einsatz kommt. Bspw. auch Einzelkornsämaschinen, Bodenbearbeitungsmaschinen oder dergl. welche jeweils ein Gestänge mit einer Mehrzahl von Arbeitselementen aufweisen.

Das System, respektive die Arbeitsmaschine weist ein, Komponenten der Arbeitsmaschine tragendes Chassis auf. Wobei das Chassis insbesondere durch das Fahrgestell und/oder die Rahmenkonstruktion der Arbeitsmaschine gebildet wird und/oder ein Fahrgestell und eine Rahmenkonstruktion umfasst. Insbesondere bildet das Chassis einen tragenden Teil der Arbeitsmaschine an welchem bspw. als Komponenten das Fahrgestell und dessen Radaufhängungen angebracht sind. Aber auch bspw. Vorratsbehälter, Motoreinheiten, Getriebe, Verteilgestänge, Trägerkonstruktionen und/oder dergl. angebaut und/oder gelagert sein können. Das Chassis kann einteilig oder mehrteilig ausgeführt sein und sowohl durch unlösbare als auch durch lösbare Verbindungen zusammengesetzt sein.

Alternativ oder ergänzend kann die Arbeitsmaschine auch als eine mittels eines Zugfahrzeug gezogene Arbeitsmaschine ausgebildet sein und somit das Chassis sowohl Komponenten der Arbeitsmaschine als auch Komponenten des Zugfahrzeug (z.B. Traktor) umfassen.

Das Gestänge ist gegenüber dem Chassis höhenverstellbar (z.B. mittels eines Parallelogramm, einer Linearführung und/oder dergl.) am Chassis gelagert, wobei dies insbesondere auch eine Ausführungsvariante mit umfasst, in der eine Trägerkonstruktion höhenverstellbar (z.B. mittels Parallelogramm, Linearführung und/oder dergl., welche zudem im Kontext der Erfindung auch Bestandteil der Trägerkonstruktion sein können) am Chassis gelagert ist und an welcher Trägerkonstruktion das Gestänge gelagert, vorzugsweise angebaut ist, insbesondere um eine in Fahrtrichtung verlaufende Drehachse drehbar gelagert ist. Die Trägerkonstruktion sowie das Parallelogramm und/oder die Linearführung kann demnach im Kontext der Erfindung auch Bestandteil des Chassis sein, respektive vom Begriff Chassis mit umfasst sein.

Gemäß einer Alternativen ausführungsvariante ist es möglich, dass das Chassis durch ein Zugfahrzeug gebildet wird an welchem Zugfahrzeug wiederum das Gestänge angebaut ist, bspw. mittels einer sog. 3-Punkt-Anhängung oder dergl.

Im vorliegenden entspricht die Fahrtrichtung insbesondere einer Längserstreckungsrichtung der Arbeitsmaschine, d.h. insbesondere einer Vorwärtsrichtung der Arbeitsmaschine. Des Weiteren umfasst die Definition "Schwenklage des Gestänges in Fahrtrichtung" somit insbesondere Bewegungen des Gestänges und/oder von Seitenteilen des Gestänges um aufrecht orientierte Schwenkachsen. Insbesondere umfasst sind hiermit Gier- und Nickbewegungen (z.B. Schwingungen des Gestänges und/oder der Seitenteile) welche in Fahrtrichtung oder gegen die Fahrtrichtung orientiert sind, des Gestänges und/oder der Seitenteile.

Am Gestänge sind eine Mehrzahl von beabstandet zueinander angeordnete Arbeitselemente (z.B. Verteilelemente wie Spritzdüsen, Prallelemente, oder dergl.) angebracht. Die Arbeitselemente können bspw. Abstände von 25cm oder 50cm zueinander aufweisen.

Die Arbeitselemente können darüber hinaus mit zumindest einem Vorratsbehälter, welcher dazu eingerichtet ist, Betriebsmittel (z.B. landwirtschaftliches Verteilgut) für die Arbeitselemente mitzuführen und/oder bereitzustellen wirkverbunden und/oder wirkverbindbar sein. Eine Wirkverbindung kann bspw. derartig erfolgen, dass die Arbeitselemente (z.B. Verteilelemente) derartig mit dem Vorratsbehälter verbunden sind (z.B. fluidisch verbunden sind), dass diese mit entsprechendem landwirtschaftlichem Verteilgut und/oder Betriebsmittel in definierten und/oder definierbaren Mengen versorgt werden können.

Gemäß einer Ausführungsvariante können die Arbeitselemente durch Verteilelemente gebildet sein, wobei die Verteilelemente zur Verteilung fester und/oder flüssiger landwirtschaftlicher Verteilgüter über/auf einer landwirtschaftlichen Ackerfläche (z.B. Nutzfläche, Bodenfläche oder dergl.), vorzugsweise über/auf einem Pflanzenbestand ausgebildet sein können. Wobei als landwirtschaftliche Verteilgüter bspw. Spritzmittel, Pflanzenschutzmittel, Düngemittel, Saatgut und/oder dergl., welche in flüssiger oder fester (z.B. granularer) Form vorliegen können, eingesetzt werden. Auch in Flüssigkeiten gelöste Granulate können entsprechend verteilt werden.

Gemäß einer alternativen oder ergänzenden Ausführungsvariante können die Arbeitselemente durch mechanische Werkzeuge (z.B. Zinken, Schare, Stößel, Greifer oder dergl.) gebildet sein, welche insbesondere zur mechanischen Bekämpfung von Unkraut, Beikraut oder dergl. geeignet sind. Wobei deren Funktion insbesondere durch unterschiedliche Arbeitsweisen der Arbeitselemente veränderbar ist.

Gemäß einer alternativen oder ergänzenden Ausführungsvariante können die Arbeitselemente durch Elemente gebildet sein, welche zur Ausgabe von Laserstrahlen, elektromagnetische Wellen, Lichtwellen, Wasserstrahlen und/oder dergl. eingerichtet sind und welche insbesondere zur Bekämpfung von Unkraut, Beikraut oder dergl. geeignet sind. Wobei deren Funktion insbesondere durch unterschiedliche Arbeitsweisen der Arbeitselemente veränderbar ist.

Es sei angemerkt, dass gemäß vorliegender Erfindung von der Definition Gestänge zweckmäßig auch Verteilgestänge wie bspw. Spritzgestänge mit umfasst sind und insbesondere das Gestänge ein Verteilgestänge bildet.

Die Arbeitselemente (z.B. Spritzdüsen) können einzeln, gruppiert oder ganzheitlich mittels der Datenverarbeitungseinrichtung ansteuerbar sein und/oder angesteuert werden.

Die Mehrzahl an Arbeitselementen können zudem gruppiert werden, d.h. mehrere Arbeitselemente können gemeinsam mittels der Datenverarbeitungseinrichtung ansteuerbar sein und/oder angesteuert werden. Wobei eine Gruppe (gruppiert) von Arbeitselementen bspw. einer Teilbreite entsprechen kann. Ferner kann eine Gruppe von Arbeitselementen bspw. 5 bis 15 Arbeitselemente (z.B. Spritzdüsen, Prallelemente, oder dergl.) umfassen. Die Gruppen können zudem beliebig variiert werden, d.h. es kann vorgesehen sein, dass eine Unterschiedliche Anzahl an Arbeitselementen eine Gruppe bilden.

Es ist möglich, dass die die Arbeitselemente bildenden Verteilelemente beabstandet zueinander an sog. Mehrfachdüsenstöcken angebracht sind, wobei an den Mehrfachdüsenstöcken verschiedene Eigenschaften aufweisende Spritzdüsen (z.B. zwei, drei oder vier Spritzdüsen) angebracht sein können.

Im Kontext der Erfindung kann der Referenzpunkt einer beliebigen Position (z.B. einem Referenzbauteil), insbesondere am Chassis, entsprechen. Bspw. kann als Referenzpunkt auch ein Laufrad oder eine Achse verwendet werden. Wenn im vorliegenden von einem Referenzpunkt die Rede ist, so gilt dies beispielshaft für einen Bezugspunkt des Chassis und/oder des Gestänge zur Definition einer Position auf einer Ackerfläche (z.B. einer Position im Raum), von Abständen, Maßen und/oder dergl.

Im Kontext der Erfindung ist es zudem auch denkbar, dass der Referenzpunkt durch zumindest eine Position am Gestänge definiert ist.

Es kann vorzugsweise vorgesehen sein, dass sowohl zur Definition der Höhenlage als auch zur Definition der Schwenklage der gleiche Referenzpunkt herangezogen wird und/oder dass zur Definition der Höhenlage als auch zur Definition der Schwenklage jeweils separate Referenzpunkte herangezogen werden.

Um eine Definition von Positionen von Arbeitselementen weiter zu verbessern ist es jedoch auch denkbar, dass zwei oder mehr, dem Chassis und/oder dem Gestänge zugeordnete Referenzpunkte vorgesehen sind. Vorzugsweise können zwei oder mehr dem Gestänge zugeordnete Referenzpunkte vorgesehen sein. Die zwei oder mehr dem Gestänge zugeordneten Referenzpunkte können bspw. links und rechts an einem äußeren viertel dem Gestänge zugeordnet sein und/oder einem Mittleren Bereich dem Gestänge zugeordnet sein.

Vorzugsweise ist die Datenverarbeitungseinrichtung dazu eingerichtet, Anhand der Fahrzeuggeometrie und/oder der Gestängegeometrie und Anhand der Höhenlage und/oder der Schwenklage des Gestänges eine Position der Arbeitselemente gegenüber dem Referenzpunkt, zu ermitteln. Wobei hierzu angemerkt sei, dass die Fahrzeuggeometrie bspw. durch das Chassis definiert sein kann.

Erfindungsgemäß kann vorzugsweise zweckmäßig anhand von geometrischen Zusammenhängen des Fahrzeuges (z.B. des Chassis) und/oder des Gestänges (z.B. anhand von Abständen der Arbeitselemente) und der jeweiligen Höhenlage und/oder Schwenklage des Gestänge mittels der Datenverarbeitungseinrichtung eine entsprechende Berechnung der tatsächlichen Lage der Arbeitselemente gegenüber einem Referenzpunkt durchgeführt werden.

Zum Ermitteln der Positionen der Arbeitselemente gegenüber dem Referenzpunkt, kann die Datenverarbeitungseinrichtung ein Steuer- und/oder Regelungsprogramm aufweisen, welches Steuer- und/oder Regelungsprogramm dazu eingerichtet ist, Anhand geometrischer Zusammenhänge und Anhand bspw. sensorisch erfasster Höhenlagen und/oder Schwenklagen des Gestänge entsprechende Positionen der Arbeitselemente gegenüber dem Referenzpunkt zu ermitteln, insbesondere zu berechnen.

Es ist möglich, dass in der Datenverarbeitungseinrichtung, die Fahrzeuggeometrie und/oder die Gestängegeometrie definierende Daten, Maße, Werte und/oder dergl. hinterlegt sind. Es ist jedoch auch möglich, dass die die Fahrzeuggeometrie und/oder die Gestängegeometrie definierenden Daten, Maße, Werte und/oder dergl. sensorisch erfassbar und/oder manuell eingebbar sind.

Erfindungsgemäß kann vorgesehen sein, dass die Fahrzeuggeometrie und/oder die Gestängegeometrie durch zumindest einem von folgendem definiert ist,
- eine Spurweite und/oder
- einen Achsabstand und/oder
- einem Relativabstand der Räder gegenüber dem Chassis und/oder
- einem ersten Abstand (z.B. Höhenabstand) des Gestänges zum Referenzpunk und/oder
- eine Breite des Gestänges und/oder
- einem Abstand der Arbeitselemente zueinander und/oder zum Referenzpunkt und/oder
- eine Winkellage eines Zugfahrzeuges zu einer gezogenen Arbeitsmaschine.

Wobei erfindungsgemäß auch noch andere Maße, Daten und Größen der Arbeitsmaschine oder des Gestänge die Fahrzeuggeometrie und/oder die Gestängegeometrie definieren können oder in die Berechnung der Position der Arbeitselemente, vorzugsweise zweckmäßig in ein in der Datenverarbeitungseinrichtung hinterlegtes Steuer- und/oder Regelungsprogramm, mit einfließen können.

Die Fahrzeuggeometrie und/oder Gestängegeometrie kann somit insbesondere eine Position des Referenzpunkt am Chassis und/oder am Gestänge definieren. Wobei dies insbesondere zu beachten ist, wenn der Referenzpunkt bspw. einem Zugfahrzeug zugeordnet ist und das Gestänge einer Arbeitsmaschine zugeordnet ist.

Im Kontext der Erfindung kann eine Höhenlage des Gestänges auch durch eine Drehlage des Gestänges um eine in Fahrtrichtung verlaufende Drehachse definiert und/oder beeinflusst sein.

Zur Erreichung einer großen Arbeitsbreite ist gemäß einer alternativen Ausführungsvariante vorgesehen, dass das Gestänge ein Mittelteil und links und rechts am Mittelteil, mittels Schwenkachsen (z.B. aufrecht orientierte Schwenkachsen und/oder parallel zur Fahrtrichtung orientierte Schwenkachsen) schwenkbar angeordnete Seitenteile aufweist, wobei die Erfassungseinrichtung vorzugsweise eine zweite Sensoranordnung aufweist welche dazu eingerichtet ist, eine Schwenklage in Fahrtrichtung der Seitenteile gegenüber dem Mittelteil zu erfassen und/oder eine Schwenklage in Fahrtrichtung des Mittelteil gegenüber dem Chassis, vorzugsweise gegenüber einer Trägerkonstruktion des Gestänge zu erfassen und/oder eine Schwenklage von zumindest zwei ein Seitenteil bildenden Segmenten zueinander zu erfassen. Wobei die Datenverarbeitungseinrichtung dazu eingerichtet ist, Anhand einer Schwenklage eine Position der Arbeitselemente gegenüber dem Referenzpunkt, zu ermitteln. Wobei hierfür ergänzend auch wieder die Fahrzeuggeometrie und/oder Gestängegeometrie herangezogen werden können, bzw. in die Positionsbestimmung mit einfließen können.

Alternativ oder ergänzend kann zudem vorgesehen sein, dass die Seitenteile sich aus zwei oder mehr mittels Schwenkachsen (z.B. aufrecht orientierte Schwenkachsen und/oder parallel zur Fahrtrichtung orientierte Schwenkachsen) schwenkbar zueinander gelagerten Segmenten zusammensetzen, wobei die Erfassungseinrichtung, vorzugsweise eine zweite Sensoranordnung aufweist, welche dazu eingerichtet ist, eine Schwenklage in Fahrtrichtung der zwei oder mehr Segmente zueinander zu erfassen. Wobei die Datenverarbeitungseinrichtung dazu eingerichtet ist, Anhand der Schwenklage eine Position der Arbeitselemente gegenüber dem Referenzpunkt zu ermitteln. Wobei hierfür ergänzend auch wieder die Fahrzeuggeometrie und/oder Gestängegeometrie herangezogen werden kann.

Zweckmäßig kann insbesondere vorgesehen sein, dass die Erfassungseinrichtung und/oder die Datenverarbeitungseinrichtung dazu eingerichtet ist, eine Schwenklage (z.B. Größe der Auslenkung) und eine Höhenlage (z.B. senkrechter Abstand des Arbeitselement zur Bodenfläche) derartig zu ermitteln, um eine Position der Arbeitselemente in Fahrtrichtung, vorzugsweise gegenüber einem Referenzpunkt, zu ermitteln (z.B. zu berechnen). Somit kann bspw. auch eine Position der Arbeitselemente gegenüber von sich auf der Ackerfläche befindlichen Pflanzen definiert werden, insbesondere in dem auch wiederum die Position, d.h. die Lage der Pflanzen gegenüber dem Referenzpunkt mit herangezogen wird.

Es kann vorgesehen sein, dass die Erfassungseinrichtung zur Erfassung einer Schwenklage eine zweite Sensoranordnung aufweist, wobei die zweite Sensoranordnung durch zumindest einen Winkelsensor gebildet ist. Wobei der Winkelsensor mit einem Seitenteil und dem Mittelteil gekoppelt sein kann, d.h. zweckmäßig mit dem Seitenteil und dem Mittelteil verbunden sein kann und/oder wobei der Winkelsensor mit dem Mittelteil und dem Chassis, vorzugsweise mit dem Mittelteil und der Trägerkonstruktion des Gestänge, gekoppelt sein kann und/oder wobei der Winkelsensor mit zwei, ein Seitenteil bildenden Segmenten gekoppelt sein kann, d.h. zweckmäßig mit zwei Segmenten verbunden sein kann.

Wobei angemerkt sei, dass die Seitenteile auch durch drei oder mehr Segmente gebildet sein können und dementsprechend auch noch mehr, z.B. mit jeweils zwei Segmenten gekoppelte Winkelsensoren vorgesehen sein können.

Gemäß einer bevorzugten Ausführungsvariante ist vorgesehen, dass die Schwenklage des Gestänge gegenüber dem Chassis (z.B. der Trägerkonstruktion) und/oder der Seitenteile gegenüber dem Mittelteil und/oder der zumindest zwei ein Seitenteil bildenden Segmente zueinander, mittels jeweils einem Stellelement (z.B. ein Aktor oder mehrere Aktoren wie bspw. Hydraulikzylinder) veränderbar ist. Wobei die Erfassungseinrichtung zur Erfassung einer Schwenklage eine zweite Sensoranordnung aufweist, welche hierbei vorzugsweise durch eine Wegmesssensorik (z.B. Wegmesssystem) und/oder eine Drucksensorik (z.B. Drucksensor in einem Steuer- und/oder Regelkreis des Aktors), die mit dem Stellelement gekoppelt (z.B. wirkverbunden) ist, gebildet ist. Es sei darauf hingewiesen, dass Schwingungen des Gestänge Bewegungen und/oder Drücke im Stellelement hervorrufen welche wiederum mittels der Erfassungseinrichtung erfasst werden können.

Gemäß einer bevorzugten Ausführungsvariante ist vorgesehen, dass die Erfassungseinrichtung zur Erfassung einer Höhenlage des Gestänge eine erste Sensoranordnung aufweist, wobei die erste Sensoranordnung durch zumindest einen, am Gestänge (z.B. auch Trägerkonstruktion denkbar) angeordneten Abstandssensor (z.B. Ultraschallsensor) gebildet ist. Alternativ oder ergänzend ist es denkbar, dass die erste Sensoranordnung durch einen Winkelsensor, welcher mit dem Chassis und einer Trägerkonstruktion (z.B. Parallelogramm, 3-Punkt-Anhängung) des Gestänge gekoppelt ist, gebildet ist.

Es ist zudem denkbar, dass sowohl dem Mittelteil als auch den Seitenteilen und/oder den Segmenten der Seitenteile jeweils entsprechende Abstandssensoren zugeordnet sind, so dass jeweils eine exakte Höhenlage für die am Mittelteil und/oder für die an den Seitenteilen und/oder an den Segmenten angeordneten (z.B. angebauten) Arbeitselemente erfasst werden kann.

Alternativ oder ergänzend kann zudem vorgesehen sein, dass die Seitenteile sich aus zwei oder mehr mittels Schwenkachsen (z.B. parallel zur Fahrtrichtung orientierte Schwenkachsen) schwenkbar zueinander gelagerten Segmenten zusammensetzen, wobei die Erfassungseinrichtung eine erste Sensoranordnung aufweist, welche dazu eingerichtet ist, unterschiedliche Höhenlage der Segmente zu erfassen. Wobei hierfür bspw. jedem Segment ein Abstandssensor zugeordnet sein kann und/oder wobei wiederum ein Winkelsensor mit jeweils zwei Segmenten gekoppelt sein kann.

Es sei darauf hingewiesen, dass in Abhängigkeit einer Höhenlage des Gestänges insbesondere auch eine Höhenlage der Arbeitselemente definiert wird.

Es ist möglich, dass die Höhenlage des Gestänges gegenüber dem Chassis mittels einer Stelleinrichtung (z.B. ein Aktor oder mehrere Aktoren wie bspw. Hydraulikzylinder) veränderbar ist. Wobei die Stelleinrichtung bspw. mit dem Chassis und der Trägerkonstruktion mittelbar oder unmittelbar gekoppelt sein kann. Hierbei kann vorgesehen sein, dass die Erfassungseinrichtung durch eine erste Sensoranordnung gebildet wird, wobei die erste Sensoranordnung hierbei vorzugsweise durch eine Wegmesssensorik (z.B. Wegmesssystem) und/oder eine Drucksensorik (z.B. Drucksensor in einem Steuer- und/oder Regelkreis des Aktors), die mit der Stelleinrichtung gekoppelt (z.B. wirkverbunden) ist, gebildet ist.

Es sei darauf hingewiesen, dass im Kontext der Erfindung die Definition Höhenlage gegenüber dem Chassis auch eine Höhenlage gegenüber einer Ackerfläche (z.B. Nutzfläche, Bodenfläche), einem Pflanzenbestand und/oder dergl. mit umfasst, respektive beinhaltet.

Neben den erwähnten Abstandsensoren, Winkelsensoren, der Wegmesssensorik oder Drucksensorik zum Erfassen der Höhenlage und/oder der Schwenklage wäre auch noch andere Sensorik denkbar, bspw. auch eine sog. Inertiale Messeinheit (IMU). Generell wäre erfindungsgemäß somit jegliche Sensorik, Messtechnik oder dergl. einsetzbar mittels der eine Höhenlage und/oder Schwenklage des Gestänges, insbesondere gegenüber einem Referenzpunkt erfasst werden kann.

Zur Erreichung von positionsgenauen Arbeiten mit der Arbeitsmaschine kann vorgesehen sein, dass die Datenverarbeitungseinrichtung mit einem Positionsbestimmungssystem (z.B. Satelliten gestütztes Positionsbestimmungssystem wie bspw. GPS-System, RTK-System oder dergl.) signalverbunden und/oder signalverbindbar ist und dass die Datenverarbeitungseinrichtung dazu eingerichtet ist, eine Position eines Referenzpunkt, auf einer landwirtschaftlichen Ackerfläche, d.h. insbesondere im Raum, zu definieren.

Eine Ausführungsvariante kann vorsehen, dass der Referenzpunkt bspw. durch eine Antenne und/oder einen Empfänger des Positionsbestimmungssystems definiert ist.

Alternativ oder ergänzend wäre es denkbar, dass in der Datenverarbeitungseinrichtung Abstände der Antenne und/oder des Empfängers des Positionsbestimmungssystems zum Referenzpunkt hinterlegt sind.

Wobei auch vorgesehen sein kann, dass insofern die Antenne und/oder der Empfänger des Positionsbestimmungssystem bspw. einem Zugfahrzeug (z.B. Traktor) einer gezogenen landwirtschaftlichen Arbeitsmaschine zugeordnet ist wiederum entsprechende Sensoren, Messeinrichtungen oder dergl. vorgesehen sein können um bspw. die Lage der Arbeitsmaschine gegenüber dem Zugfahrzeug zu ermitteln und somit wiederum die Abstände und Lagen der Antenne und/oder des Empfängers des Positionsbestimmungssystems zum Referenzpunkt zu definieren.

Erfindungsgemäß ist es somit zweckmäßig insbesondere möglich, dass durch die Definition einer Höhenlage und/oder einer Schwenklage des Gestänges (z.B. auch der Segmente des Gestänges) gegenüber dem Referenzpunkt, sowie anhand der Fahrzeuggeometrie und/oder der Gestängegeometrie sowie der mittels des Positionsbestimmungssystem definierten Position des Referenzpunkt auf einer Ackerfläche somit auch die exakten Positionen der Arbeitselemente auf der Ackerfläche mittels der Datenverarbeitungseinrichtung definiert (z.B. berechnet) werden können. Wobei dies insbesondere in Echtzeit erfolgen kann.

Somit ist es zweckmäßig bspw. möglich, die Ausbringmenge von landwirtschaftlichem Verteilgut und/oder die Arbeitsweise einzelner, gruppierter oder sämtlicher durch Verteilelemente gebildeter Arbeitselemente noch exakter anzupassen. Insbesondere ist es somit auch möglich, die Ausbringmenge gezielt nur in Bereichen der Ackerfläche anzupassen in denen dies auch erforderlich ist. Somit werden insbesondere auch Applikationskarten basierte Verteilvorgänge oder Arbeiten in deren Genauigkeit wesentlich verbessert.

In einer weiteren Ausführungsvariante ist die Datenverarbeitungseinrichtung dazu eingerichtet, die Anpassung der Ausbringmenge an einzelnen, gruppierten oder sämtlichen Verteilelementen durch eine Pulsweitenmodulation umzusetzen. Wobei zudem vorgesehen sein kann, dass einzelne, gruppierte oder sämtliche Verteilelemente mit entsprechenden Ventilen ausgestattet und ansteuerbar sind, insbesondere das die Ventile mit der Datenverarbeitungseinrichtung mit einer erforderlichen Pulsweitenmodulation angesteuert werden können. Insofern die Verteilelemente an Mehrfachdüsenstöcken angebaut sind, kann auch vorgesehen sein das diese mittels Pulsweitenmodulation angesteuert werden.

In einer weiteren Ausführungsvariante ist die Datenverarbeitungseinrichtung dazu eingerichtet, eine Anpassung der Verteilgutmenge durch eine Veränderung der Dosiermenge (z.B. Menge an Verteilgut das vom Vorratstank zu den Verteilelementen gefördert wird), veränderte Querschnitte (z.B. der den Vorratstank und die Verteilelemente verbindenden Leitungen), veränderte Drücke (z.B. in den, den Vorratstank und die Verteilelemente verbindenden Leitungen) und/oder dergl. umzusetzen.

Gemäß einer Weiterbildung der Erfindung kann vorgesehen sein, dass die Datenverarbeitungseinrichtung mit einem Pflanzenbestimmungssystem, welches dazu eingerichtet ist, Zustandsinformationen (z.B. mittels Kamera, Sensor, oder dergl.) eines Pflanzenbestand einer Ackerfläche zu erfassen, signalverbunden und/oder signalverbindbar ist und dass die Datenverarbeitungseinrichtung dazu eingerichtet ist, Anhand einer Position der Arbeitselemente und Anhand der mittels des Pflanzenbestimmungssystem erfassten Zustandsinformationen die Ausbringmenge an landwirtschaftlichem Verteilgut und/oder die Arbeitsweise einzelner, gruppierter oder sämtlicher Arbeitselemente zu verändern, insbesondere an Zustandsinformationen anzupassen.

Um eine positionsgenaue Arbeitsweise der Arbeitsmaschine zu ermöglichen, kann gemäß einer Weiterbildung der Erfindung vorgesehen sein, dass die Datenverarbeitungseinrichtung mit einem Pflanzenbestimmungssystem, welches dazu eingerichtet ist Positionen (z.B. mittels Kamera, Sensoren, Positionsbestimmungssystemen, oder dergl.) von Pflanzen auf einer Ackerfläche zu definieren, signalverbunden und/oder signalverbindbar ist, und dass die Datenverarbeitungseinrichtung dazu eingerichtet ist, Anhand einer Position der Arbeitselemente gegenüber dem Referenzpunkt, und Anhand der mittels des Pflanzenbestimmungssystems definierten Position von Pflanzen, insbesondere gegenüber dem Referenzpunkt, die Ausbringmenge an landwirtschaftlichem Verteilgut und/oder die Arbeitsweise einzelner, gruppierter oder sämtlicher Arbeitselemente zu verändern.

Erfindungsgemäß kann vorgesehen sein, dass die Datenverarbeitungseinrichtung mit einem Pflanzenbestimmungssystem signalverbunden und/oder signalverbindbar ist, wobei das Pflanzenbestimmungssystem dazu eingerichtet ist, offline eine Position von Pflanzen auf einer Ackerfläche (z.B. im Raum) zu definieren und/oder offline Zustandsinformationen eines Pflanzenbestand zu erfassen.

Insbesondere bei offline Anwendungen ist die vorliegende Erfindung somit von entscheidender Bedeutung.

Wobei offline im Kontext der Erfindung insbesondere umfasst, dass das Pflanzenbestimmungssystem nicht fest mit der Arbeitsmaschine, respektive dem Gestänge verbunden ist. Vorzugsweise kann vorgesehen sein, dass die Datenverarbeitungseinrichtung mit einem Pflanzenbestimmungssystem signalverbunden und/oder signalverbindbar ist, wobei das Pflanzenbestimmungssystem einem mobilen Endgerät (z.B. Smartphone, Tablet-PC), einem Flugobjekt (z.B. Drohne) und/oder einem Planungssystem (z.B. Spurplanungssystem, Routenplanungssystem, Applikationskarten) zugeordnet ist oder dieses umfasst.

Somit kann insbesondere vorgesehen sein, dass eine Definition von Positionen von Pflanzen und/oder ein Erfassen von Zustandsinformationen bereits vor Arbeitsbeginn der landwirtschaftlichen Arbeitsmaschine erfolgt, um somit bspw. die Arbeitsprozesse der Arbeitsmaschine besser und exakter planen zu können.

Es ist möglich, dass die Datenverarbeitungseinrichtung dazu eingerichtet ist, eine Position der Arbeitselemente anhand einer Fahrgeschwindigkeit der Arbeitsmaschine zu ermitteln, vorzugsweise Anhand einer bei einer Kurvenfahrt auftretenden Beschleunigung an den Arbeitselementen zu ermitteln (z.B. zu berechnen)

Es ist möglich, dass die landwirtschaftliche Arbeitsmaschine, zweckmäßig insbesondere die Datenverarbeitungseinrichtung eine graphische Anzeigevorrichtung aufweist und/oder mit einer graphischen Anzeigevorrichtung signalverbunden und/oder signalverbindbar ist und die graphische Anzeigevorrichtung ausgebildet ist, erfasste Höhenlagen, Schwenklagen und/oder Positionen von Arbeitselementen graphisch anzuzeigen. Die graphische Anzeigevorrichtung kann bspw. ein Terminal, ein Display, ein mobiles Endgerät, ein Computer und/oder dergl. sein.

Eine Weiterbildung der Erfindung kann zudem vorsehen, dass Anhand einer Position der Arbeitselemente und Anhand der Position von Pflanzen auf einer Ackerfläche eine Orientierung eines von einem Verteilelement (d.h. Arbeitselement) erzeugten Verteilkegel (z.B. Spritzkegel) verändert wird um somit eine optimale Bedeckung, respektive Benetzung der Pflanzen zu erreichen.

Die Datenverarbeitungseinrichtung weist bspw. eine Rechnereinheit, einen Bordcomputer und/oder dergl. auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann.

Die Datenverarbeitungseinrichtung ist zudem insbesondere zur Ermittlung von Positionen von Arbeitselementen eine Steuerungs- und/oder Regelungseinrichtung mit einem entsprechenden Steuerungs- und/oder Regelungsprogramm.

Im Kontext der Erfindung umfasst der Begriff der Datenverarbeitungseinrichtung, insbesondere die Gesamtheit der Bauteile zur Signal- und/oder Befehlsübertragung. Dementsprechend auch Rechnereinheiten, CPU's und/oder dergl. Ebenso umfasst sind entsprechend auch in den jeweiligen Sensoren oder Sensoreinheiten oder Sensoranordnungen integrierte Datenverarbeitungseinrichtungen. Ebenso sei darauf hingewiesen, dass die Sensoren / Messeinrichtungen / Erfassungseinrichtungen etc. jeweils als Rückkoppelung für eine Steuer- und/oder Regelgröße herangezogen werden können.

Die Datenverarbeitungseinrichtung kann zudem ausgebildet sein, die Daten von zwei oder mehr Sensoreinrichtungen, Sensoren oder dergl. zu fusionieren, um somit die Ermittlung der Positionen der Arbeitselemente noch weiter zu verbessern.

Es sei noch darauf hingewiesen, dass die Begriffe "Steuern" und "Regeln" bzw. "Steuereinrichtung" und "Regelungseinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Zur Vermeidung von Wiederholungen sollen im Zusammenhang mit dem System offenbarte Merkmale auch Verfahrensgemäß und für eine landwirtschaftliche Arbeitsmaschine offenbart gelten und beanspruchbar sein. Die vorgenannten Aspekte und erfindungsgemäßen Merkmale und Ausführungsvarianten, insbesondere im Hinblick auf das System gelten somit auch für das Verfahren sowie für die Arbeitsmaschine und sind in beliebiger Weise und Frei miteinander kombinierbar. In umgekehrter Weise gilt das gleiche, so dass auch alle Aspekte, erfindungsgemäße Merkmale und Ausführungsvarianten die im Zusammenhang mit der Verfahren oder der Arbeitsmaschine offenbart sind, demnach auch für das System offenbart und entsprechend beanspruchbar sind.

Die Erfindung umfasst zur Lösung der Aufgaben zudem ein Verfahren zum Ermitteln einer Position von Arbeitselementen an einer landwirtschaftlichen Arbeitsmaschine. Insbesondere zum Ermitteln einer Position von Arbeitselementen auf einer Ackerfläche (z.B. im Raum).

Das erfindungsgemäße Verfahren umfasst ein Bereitstellen eines, Komponenten der Arbeitsmaschine tragenden, Chassis.

Das erfindungsgemäße Verfahren umfasst zudem ein Bereitstellen eines gegenüber dem Chassis höhenverstellbar am Chassis gelagerten und sich in großer Arbeitsbreite quer zur Fahrtrichtung erstreckenden Gestänge, mit einer Mehrzahl von an diesem beabstandet zueinander angeordneten Arbeitselementen.

Zudem umfasst das Verfahren ein Bereitstellen einer Erfassungseinrichtung, welche dazu eingerichtet ist, eine Schwenklage des Gestänges in Fahrtrichtung gegenüber dem Referenzpunkt, zu erfassen.

Des Weiteren umfass das Verfahren, ein Bereitstellen einer Datenverarbeitungseinrichtung (z.B. Steuerungs- und/oder Regelungseinrichtung).

Das erfindungsgemäße Verfahren umfasst darüber hinaus, ein Ermitteln einer Position der Arbeitselemente gegenüber einem Referenzpunkt anhand einer Schwenklage mittels der Datenverarbeitungseinrichtung (z.B. mittels eines in der Datenverarbeitungseinrichtung hinterlegten Steuerungs- und/oder Regelungsprogramm).

Verfahrensgemäß kann zudem vorgesehen sein, dass die Datenverarbeitungseinrichtung mit einem Positionsbestimmungssystem (z.B. GPS-System, RTK-System oder dergl.) signalverbunden und/oder signalverbindbar ist und dass die Datenverarbeitungseinrichtung dazu eingerichtet ist, eine Position des Referenzpunkt auf einer landwirtschaftlichen Ackerfläche zu definieren und dass die Datenverarbeitungseinrichtung mit einem Pflanzenbestimmungssystem, welches dazu eingerichtet ist Positionen von Pflanzen auf einer Ackerfläche zu definieren, signalverbunden und/oder signalverbindbar ist, und dass die Datenverarbeitungseinrichtung dazu eingerichtet ist, Anhand einer Position der Arbeitselemente gegenüber dem Referenzpunkt, und Anhand der mittels des Pflanzenbestimmungssystem definierten Position von Pflanzen, insbesondere gegenüber dem Referenzpunkt, die Ausbringmenge an landwirtschaftlichem Verteilgut und/oder die Arbeitsweise einzelner, gruppierter oder sämtlicher Arbeitselemente zu verändern.

Die Erfindung umfasst zur Lösung der Aufgaben zudem eine landwirtschaftliche Arbeitsmaschine, vorzugsweise eine Feldspritze oder Düngerstreuer (z.B. pneumatischer Düngerstreuer).

Die Arbeitsmaschine weist ein, Komponenten der Arbeitsmaschine tragendes Chassis, sowie ein gegenüber dem Chassis höhenverstellbar am Chassis gelagertes Verteilgestänge auf, welches ein Mittelteil und links und rechts am Mittelteil mittels Schwenkachsen (z.B. aufrecht orientierte Schwenkachsen) schwenkbar angeordnete Seitenteile sowie eine Mehrzahl von an diesen angeordneten Arbeitselementen auf.

Erfindungsgemäß ist vorgesehen, dass die Arbeitsmaschine ein System wie hierin offenbart umfasst, insbesondere ein System nach einem der Ansprüche 1 bis 14 umfasst. Alternativ oder ergänzend kann zudem vorgesehen sein, dass die Arbeitsmaschine dazu eingerichtet ist, ein Verfahren nach zumindest einem der Ansprüche 15 oder 16 auszuführen.

Die landwirtschaftliche Arbeitsmaschine dient insbesondere zum Ausbringen und Verteilen von landwirtschaftlichen Verteilgütern, bspw. Spritzmittel, Pflanzenschutzmittel, Dünger oder dergl., und weist ein Gestänge (z.B. Verteilgestänge wie bspw. Spritzgestänge) mit einer großen Arbeitsbreite von 24 Meter, 30 Meter, 36 Meter oder mehr und einer Mehrzahl von Arbeitselementen auf.

Alternativ oder ergänzend dient die Arbeitsmaschine insbesondere zur Bekämpfung von Unkraut, Beikraut oder dergl.

Die landwirtschaftliche Arbeitsmaschine, vorzugsweise die Feldspritze oder der Düngerstreuer, kann als eine selbstfahrende oder als eine mittels eines Zugfahrzeug (z.B. Traktor) gezogene oder als eine an einem Zugfahrzeug angebaute (z.B. mittels 3-Punkt-Anhängung) Arbeitsmaschine ausgeführt sein. Die Arbeitsmaschine kann zudem ein autonome (z.B. teilautonom oder vollautonom) landwirtschaftliche Arbeitsmaschine sein.

Die zuvor beschriebenen bevorzugten Ausführungsformen, Merkmale und Aspekte der Erfindung sind in beliebiger weise und frei miteinander kombinierbar.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine Perspektivansicht einer Ausführungsvariante einer selbstfahrenden landwirtschaftlichen Arbeitsmaschine,
- Figur 2A & 2B: eine Seitenansicht einer landwirtschaftlichen Arbeitsmaschine gemäß der Figur 1, mit einem unterschiedliche Höhenlagen aufweisenden Gestänge in Form eines Verteilgestänge bzw. Spritzgestänge,
- Figur 3A & 3B: eine Draufsicht einer landwirtschaftlichen Arbeitsmaschine gemäß der Figur 1, mit einem unterschiedliche Schwenklagen aufweisenden Gestänge,
- Figur 4: eine schematische Darstellung einer Ausführungsvariante eines erfindungsgemäßen Systems und/oder eines erfindungsgemäßen Verfahrens zum Ermitteln der Position von Arbeitselementen.

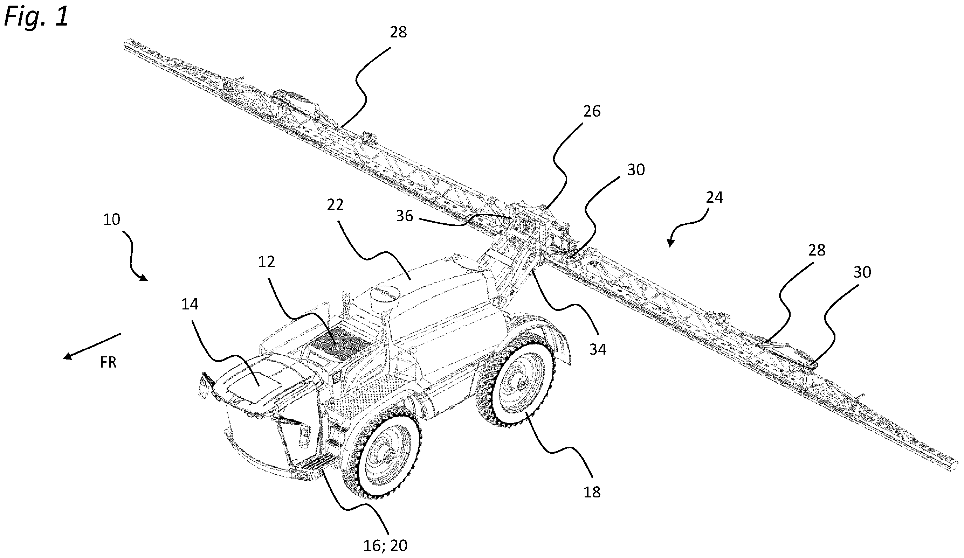

Die in den Figuren 1 bis 4 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie das erfindungsgemäße System, das erfindungsgemäße Verfahren und die erfindungsgemäße landwirtschaftliche Arbeitsmaschine ausgestaltet und ausgeführt sein können und stellen keine abschließende Begrenzung dar.

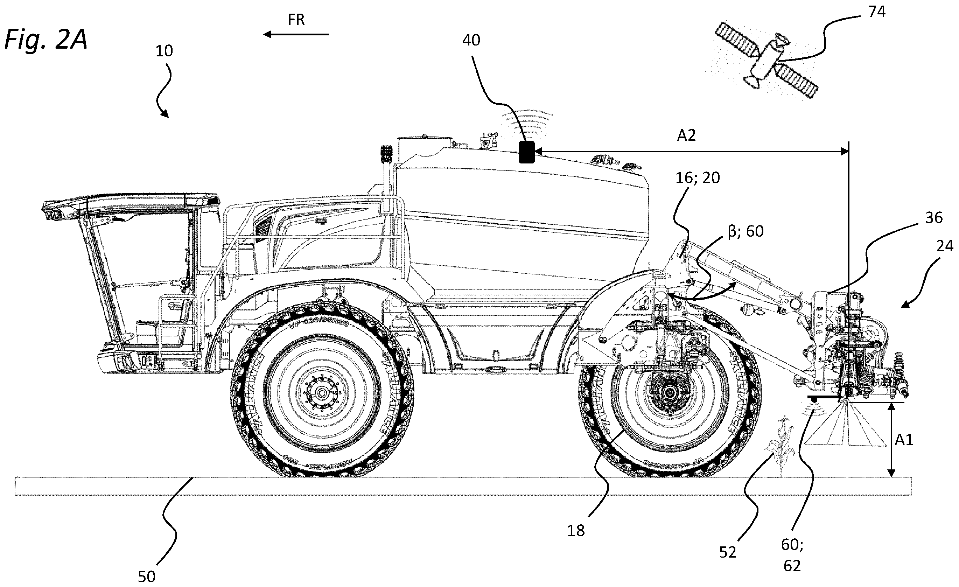

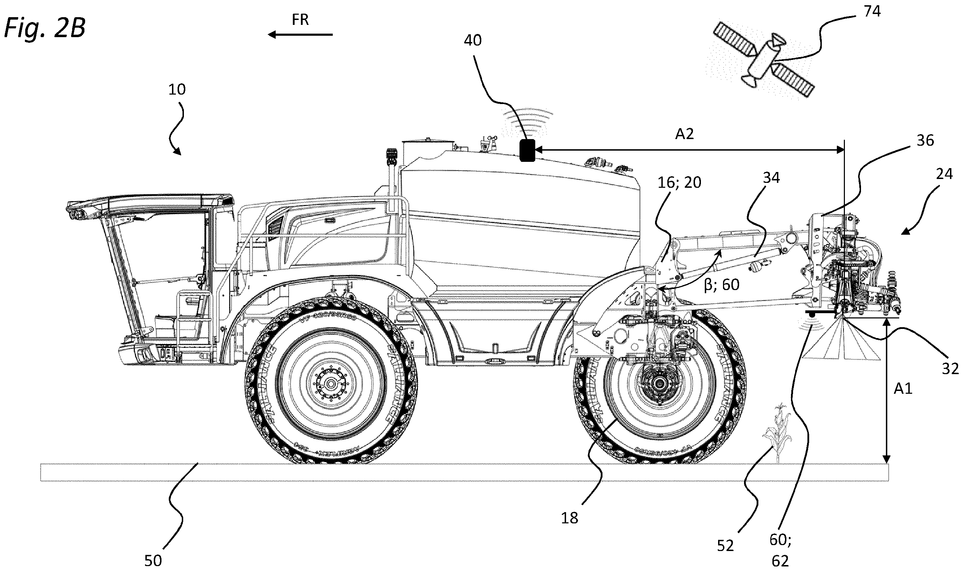

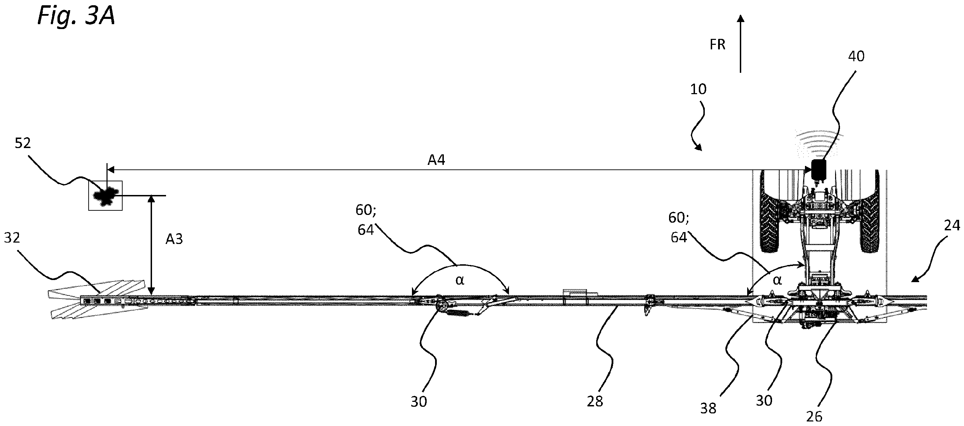

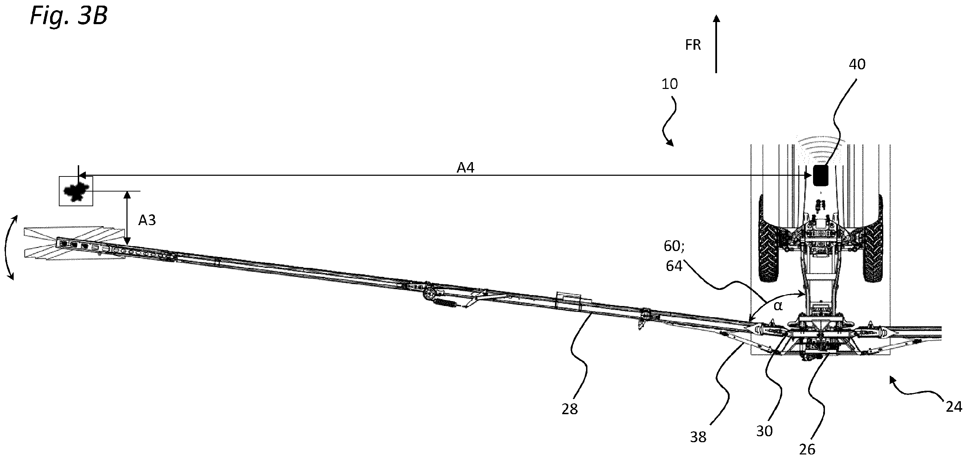

Eine Ausführungsvariante einer landwirtschaftlichen Arbeitsmaschine 10, in Form einer selbstfahrenden Feldspritze und/oder eines Düngerstreuer (z.B. pneumatischer Düngerstreuer) geht aus der Perspektivansicht der Figur 1, den Seitenansichten der Figuren 2A & 2B und den Draufsichten der Figuren 3A & 3B hervor. Die Arbeitsmaschine 10 ist in den Ausführungsbeispielen jeweils als selbstfahrende Feldspritze mit einer Motoreinheit 12 und einer Fahrerkabine 14 für eine Bedienperson ausgestattet.

Die Arbeitsmaschine 10 umfasst insbesondere ein System 100 wie hierin beschrieben. Insbesondere umfasst die Arbeitsmaschine ein System 100 nach einem der Patentansprüche 1 bis 14. Alternativ oder ergänzend ist Arbeitsmaschine 10 dazu eingerichtet, ein Verfahren zum Ermitteln einer Position von Arbeitselementen wie hierin beschrieben auszuführen, insbesondere ein Verfahren nach zumindest einem der Verfahrensansprüche 15 oder 16 auszuführen.

Gemäß der Ausführungsbeispiele umfasst die Arbeitsmaschine 10 ein, Komponenten der Arbeitsmaschine 10 tragendes Chassis 16 mit einem Fahrwerk 18 und einer Rahmenkonstruktion 20. Zum Mitführen und Bereitstellen von landwirtschaftlichen Betriebsmitteln (z.B. Verteilgut wie Spritzmittel, Pflanzenschutzmittel und/oder dergl.) umfasst die Arbeitsmaschine 10 zudem einen Vorratsbehälter 22. Zum Verteilen der Betriebsmittel, d.h. zum Verteilen von Verteilgut umfasst die Arbeitsmaschine 10 darüber hinaus ein gegenüber dem Chassis 16 höhenverstellbar am Chassis 16 gelagertes Gestänge 24, insbesondere in Form eines Verteilgestänge bzw. Spritzgestänge.

Das Gestänge 24 ist in einer Arbeitsstellung dargestellt und erstreckt sich in einer großen Arbeitsbreite (z.B. 24 Meter, 30 Meter oder mehr) quer zur Fahrtrichtung FR. Das Gestänge 24 setzt sich aus einem Mittelteil 26 und links und rechts am Mittelteil 26 mittels Schwenkachsen 30 schwenkbar angeordneten Seitenteilen 28 zusammen. Zudem setzen sich die Seitenteile 28 wiederum aus zumindest zwei mittels Schwenkachsen 30 schwenkbar zueinander angeordneten Segmenten zusammen.

Am Gestänge 24 sind zum Verteilen und Ausbringen des landwirtschaftlichen Verteilgut eine Mehrzahl von beabstandet zueinander angeordneten durch Verteilelemente gebildete Arbeitselemente 32 (z.B. Spritzdüsen), die mit dem Vorratsbehälters 22 wirkverbunden sind, angebracht, wobei der Übersicht halber in den Figuren 2 & 3 nur eine sog. Spritzdüse dargestellt ist. Die Arbeitselemente 32 können einzeln, gruppiert oder gesamt mittels einer Datenverarbeitungseinrichtung 150 angesteuert werden. Wie aus den Figuren 2 & 3 hervorgeht, erzeugen die Arbeitselemente 32 einen in Richtung einer Bodenfläche 50 gerichteten Verteilkegel (z.B. Spritzkegel) zur Verteilung des landwirtschaftlichen Verteilgut.

Das Gestänge 24 ist höhenverstellbar gegenüber dem Chassis 16 am Chassis 16 gelagert, wobei zur Veränderung einer Höhenlage des Gestänge 24 gegenüber dem Chassis, respektive gegenüber einer Ackerfläche 50 (z.B. Bodenfläche, Pflanzen, oder dergl.) eine Stelleinrichtung 34 vorgesehen ist, welche Stelleinrichtung 34 bspw. durch einen oder mehrere Aktuator(en) (z.B. Hydraulikzylinder und/oder Pneumatikzylinder) gebildet sein kann, und welche mit einer Datenverarbeitungseinrichtung 150, drahtgebunden und/oder drahtlos signalverbunden und/oder signalverbindbar sein kann.

Das Gestänge 24 ist in dessen Höhenlage gegenüber dem Chassis 16 verstellbar (siehe Figur 2A & 2B), so dass sich ein erster Abstand A1 des Gestänge 24 gegenüber einer Ackerfläche 50 ändert, wodurch sich jedoch wiederum ein zweiter Abstand A2 der Arbeitselemente 32 gegenüber dem Chassis 16, insbesondere gegenüber einem Referenzpunkt 40 ändert, d.h. Anhand einer Höhenlage des Gestänge 24 ändert sich ein zweiter Abstand A2 der Arbeitselemente 32 gegenüber einem Referenzpunkt 40, insbesondere ein Abstand in Fahrtrichtung FR, wobei diese Änderung zudem von der Fahrzeuggeometrie und/oder der Gestängegeometrie mit beeinflusst wird und die Änderung mittels der Datenverarbeitungseinrichtung 150 anhand des sensorisch erfassten ersten Abstand A1 und der Fahrzeuggeometrie und/oder Gestängegeometrie berechnet werden kann.

Zur Verstellung der Höhenlage ist das Gestänge 24 an einer Trägerkonstruktion 36 gelagert, welche Trägerkonstruktion 36 mittels eines Parallelogramms höhenverstellbar gegenüber dem Chassis 16 gelagert ist. Das Gestänge 24 kann zudem um eine in Fahrtrichtung FR verlaufende Drehachse drehbar an der Trägerkonstruktion 36 gelagert sein. Somit wird wiederum mittels des Parallelogramms eine Fahrzeuggeometrie und eine Gestängegeometrie definiert, bspw. durch die Länge der Lenker des Parallelogramms und deren Anlenkpunkte am Chassis 16. Es sei noch darauf hingewiesen, dass die Trägerkonstruktion 36 und das Parallelogramm ebenso Bestandteil des Chassis 16 sein können, respektive ist.

Gemäß einem Ausführungsbeispiel ist vorgesehen, dass eine Datenverarbeitungseinrichtung 150 dazu eingerichtet ist, Anhand der Höhenlage (z.B. eines ersten Abstand A1) eine Position der Arbeitselemente 32 gegenüber dem Referenzpunkt 40 zu ermitteln (z.B. zu berechnen), vorzugsweise unter Berücksichtigung der Fahrzeuggeometrie und/oder Gestängegeometrie.

Zur Erfassung einer Höhenlage des Gestänge 24, d.h. zur Erfassung eines ersten Abstand A1 ist eine Erfassungseinrichtung 60 vorgesehen, wobei die Erfassungseinrichtung 60 insbesondere durch eine erste Sensoranordnung 62 gebildet wird. Die erste Sensoranordnung 62 umfasst hierbei zumindest einen am Gestänge 24 angeordneten, vorzugsweise nach unten messenden Abstandssensor (z.B. Ultraschallsensor). Alternativ oder ergänzend wäre auch denkbar, dass die erste Sensoranordnung 62 durch einen Winkelsensor gebildet ist, welcher bspw. mit dem Chassis 16 und der Trägerkonstruktion 36 gekoppelt ist und insbesondere einen Höhenwinkel β erfasst, der bspw. zwischen dem Chassis 16 und der Trägerkonstruktion 36, respektive zwischen dem Chassis 16 und dem Parallelogramm vorhanden ist. Somit kann auch wiederum auf Basis des Höhenwinkel β und der Fahrzeuggeometrie und/oder der Gestängegeometrie eine Höhenlage des Gestänges, respektive ein erster Abstand A1 ermittelt werden, bspw. mittels der Datenverarbeitungseinrichtung.

Zur Verstellung der Höhenlage des Gestänge 24 gegenüber dem Chassis 16 (d.h. gegenüber der Ackerfläche 50) ist eine Stelleinrichtung 34 vorgesehen. Wobei die Datenverarbeitungseinrichtung 150 insbesondere dazu eingerichtet ist, Stellsignale für die Stelleinrichtung 34 zu generieren. Die Stelleinrichtung 34 wird durch einen Aktor in Form eines Hydraulikzylinder gebildet, es wären jedoch auch zwei oder mehr Aktoren denkbar, sowie auch pneumatisch und/oder elektrisch betriebene Aktoren.

Gemäß einer alternativen oder ergänzenden Ausführungsvariante wäre es zudem denkbar, dass die erste Sensoranordnung 62 durch eine Wegmesssensorik und/oder eine Drucksensorik die mit der Stelleinrichtung 34 gekoppelt (z.B. wirkungstechnisch verbunden) ist, gebildet ist.

Das Gestänge 24 setzt sich aus einem Mittelteil 26 und links und rechts am Mittelteil 26 mittels Schwenkachsen 30 (z.B. aufrecht orientierte Schwenkachsen) schwenkbar angeordneten (z.B. gelagerten) Seitenteilen 28 zusammen (siehe Figur 3A & 3B), wobei auch wiederum die Seitenteile sich aus zwei oder mehr Segmenten zusammensetzen können, bzw. in den Ausführungsbeispielen zusammen setzen, welche zwei oder mehr Segmente wiederum mittels Schwenkachsen 30 (z.B. aufrecht orientiert oder parallel zur Fahrtrichtung FR orientiert) schwenkbar zueinander gelagert sein können.

Wie aus den Figuren 3A & 3B hervorgeht führt das Gestänge 24, insbesondere die Seitenteile 28 Schwenkbewegungen (z.B. Gier- und Nickbewegungen und/oder Schwingungen) gegenüber dem Chassis 16, insbesondere gegenüber dem Referenzpunkt 40 durch (siehe Figur 3B), so dass sich ein dritter Abstand A3 (z.B. horizontaler Abstand) der Arbeitselemente 32 gegenüber dem Referenzpunkt 40, insbesondere gegenüber einer Pflanze 52 verändert. Zudem ändert sich ein vierter Abstand A4 (z.B. Seitenabstand) der Arbeitselemente 32 gegenüber dem Referenzpunkt 40.

Die Größe der Schwenklage kann bspw. durch einen Schwenkwinkel α der Seitenteile 28 gegenüber dem Mittelteil 26 und/oder durch einen Schwenkwinkel α des Mittelteil 26 zur Trägerkonstruktion 36 definiert sein. Insofern sich die Seitenteile aus zwei oder mehr Segmenten zusammensetzen, kann auch wiederum eine Schwenkwinkel α zwischen zwei Segmenten eine Schwenklage definieren.

Erfindungsgemäß ist vorgesehen, dass eine Datenverarbeitungseinrichtung 150 dazu eingerichtet ist, Anhand der Schwenklage (z.B. eines Schwenkwinkel α) eine Position der Arbeitselemente 32 gegenüber dem Referenzpunkt 40 zu ermitteln (z.B. zu berechnen), vorzugsweise unter Berücksichtigung der Fahrzeuggeometrie und/oder Gestängegeometrie (z.B. der Gestängebreite und/oder der Position der Arbeitselemente 32 am Gestänge 24 (z.B. an welchem Segment, Seitenteil, Mittelteil das Arbeitselement 32 angebaut ist)).

Zur Erfassung der Schwenklage in Fahrtrichtung der Seitenteile 28 gegenüber dem Mittelteil 26 und/oder des Mittelteil 26 gegenüber einer Trägerkonstruktion 36 ist eine Erfassungseinrichtung 60 vorgesehen, wobei die Erfassungseinrichtung 60 eine zweite Sensoranordnung 64 aufweist.

Es kann vorgesehen sein, dass die zweite Sensoranordnung 64 durch zumindest einen Winkelsensor, welcher mit dem Seitenteil 28 und dem Mittelteil 26 gekoppelt ist und/oder welchem mit dem Mittelteil 26 um dem Chassis 16 (oder mit der Trägerkonstruktion 36) gekoppelt (z.B. wirkungstechnisch verbunden) ist und/oder welcher mit zwei Segmenten gekoppelt ist, gebildet ist. Die Schwenklage des Gestänge 24 gegenüber dem Chassis 16, vorzugsweise die Schwenklage der Seitenteile 28 gegenüber dem Mittelteil 26 ist mittels eines Stellelement 38 veränderbar. Wobei die Datenverarbeitungseinrichtung 150 insbesondere dazu eingerichtet ist, Stellsignale für das Stellelement 38 zu generieren. Das Stellelement 38 wird durch einen Aktor in Form eines Hydraulikzylinder gebildet, es wären jedoch auch zwei oder mehr Aktoren denkbar, sowie auch pneumatisch und/oder elektrisch betriebene Aktoren denkbar.

Gemäß einer alternativen oder ergänzenden Ausführungsvariante wäre es zudem denkbar, dass die zweite Sensoranordnung 64 durch eine Wegmesssensorik und/oder eine Drucksensorik die mit dem Stellelement 38 gekoppelt (z.B. wirkungstechnisch verbunden) ist, gebildet ist.

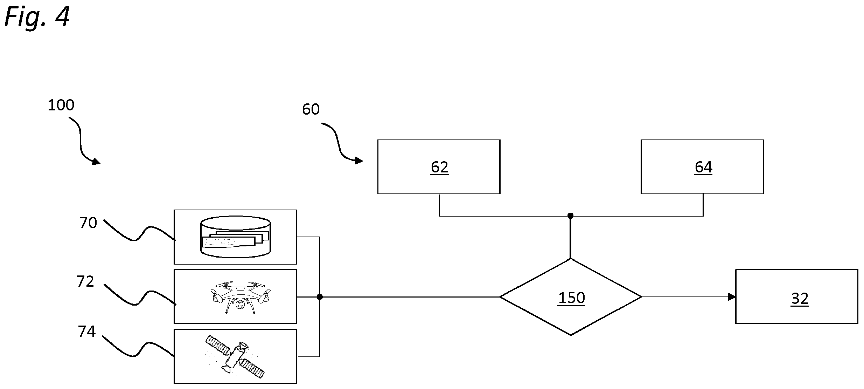

Weitere Details der Erfindung gehen zudem aus der schematischen Darstellung eines System 100 der Figur 4 hervor.

Zur Erreichung einer positionsgenauen Durchführung von Arbeitsprozessen mittels der Arbeitselemente 32 kann vorgesehen sein, dass die Datenverarbeitungseinrichtung 150 mit einem Positionsbestimmungssystem 74 (z.B. GPS-System, RTK-System oder dergl.) signalverbunden und/oder signalverbindbar ist und das die Datenverarbeitungseinrichtung 150 erfindungsgemäß dazu eingerichtet ist, eine Position eines Referenzpunkt 40 auf einer Ackerfläche (z.B. Bodenfläche 50, Nutzfläche, oder dergl.) zu definieren.

Der Referenzpunkt 40 ist gemäß der Ausführungsbeispiele durch eine Antenne und/oder einen Empfänger des Positionsbestimmungssystems 74 definiert, wodurch erreicht wird, dass mittels des Positionsbestimmungssystems 74 die Position des Referenzpunkt 40 auf der Ackerfläche 50 definiert wird. Wodurch erreicht wird, dass durch die Definition der Höhenlage und/oder der Schwenklage des Gestänge 24 gegenüber dem Referenzpunkt 40, sowie anhand der Fahrzeuggeometrie und/oder der Gestängegeometrie, sowie der mittels des Positionsbestimmungssystems 74 definierten Position des Referenzpunkt 40 auf der Ackerfläche 50 somit die exakte Position der Arbeitselemente 32 auf der Ackerfläche 50 definiert werden kann, zweckmäßig insbesondere mittels der Datenverarbeitungseinrichtung 150 definiert (z.B. berechnet) werden kann.

Erfindungsgemäß kann somit zweckmäßig erreicht werden, die Ausbringmenge von landwirtschaftlichem Verteilgut und/oder die Arbeitsweise einzelner, gruppierter oder sämtlicher Arbeitselemente 32 noch exakter anzupassen. Insbesondere ist es somit auch möglich die Ausbringmenge und/oder die Arbeitsweise der Arbeitselemente 32 gezielt nur in Bereichen der Ackerfläche 50 anzupassen in denen dies auch erforderlich ist.

Zur Anpassung der Arbeitsweise der Arbeitselemente 32 an einen Pflanzenbestand (z.B. Menge an Nutzpflanzen oder Begleitvegetation) kann die Datenverarbeitungseinrichtung 150 mit einem Pflanzenbestimmungssystem signalverbunden und/oder signalverbindbar (z.B. auch ausgestattet sein) sein. Wobei das Pflanzenbestimmungssystem dazu eingerichtet ist, Zustandsinformationen (z.B. mittels Kamera, Sensoren) eines Pflanzenbestand einer Ackerfläche 50 zu erfassen. Die Zustandsinformationen können bspw. ein Wachstumsstadium, Krankheitsbilder, eine Menge an Nutzpflanzen und Begleitvegetation oder dergl. umfassen.

Erfindungsgemäß kann vorgesehen sein, dass die Datenverarbeitungseinrichtung 150 dazu eingerichtet ist, Anhand einer Position der Arbeitselemente 32 und Anhand der mittels des Pflanzenbestimmungssystem erfassten Zustandsinformationen die Ausbringmenge an landwirtschaftlichem Verteilgut und/oder die Arbeitsweise einzelner, gruppierter oder sämtlicher Arbeitselemente 32 zu verändern, zweckmäßig insbesondere an Zustandsinformationen anzupassen.

Um eine positionsgenaue Bearbeitung einer Ackerfläche mittels der Arbeitselemente 32 zu erreichen, kann gemäß einer Weiterbildung der Erfindung vorgesehen sein, dass die Datenverarbeitungseinrichtung 150 mit einem Pflanzenbestimmungssystem, welches dazu eingerichtet ist Positionen (z.B. mittels Kamera, Sensoren, Positionsbestimmungssystemen, oder dergl.) von Pflanzen 52 auf einer Ackerfläche zu definieren, signalverbunden und/oder signalverbindbar ist, und dass die Datenverarbeitungseinrichtung 150 dazu eingerichtet ist, Anhand einer Position der Arbeitselemente 32 gegenüber dem Referenzpunkt 40, und Anhand der mittels des Pflanzenbestimmungssystems definieren Position von Pflanzen 52, insbesondere gegenüber dem Referenzpunkt 40, die Ausbringmenge an landwirtschaftlichem Verteilgut und/oder die Arbeitsweise einzelner, gruppierter oder sämtlicher Arbeitselemente 32 zu verändern.

Erfindungsgemäß kann vorgesehen sein, dass die Datenverarbeitungseinrichtung 150 mit einem Pflanzenbestimmungssystem signalverbunden und/oder signalverbindbar ist, wobei das Pflanzenbestimmungssystem dazu eingerichtet ist offline eine Position von Pflanzen auf einer Ackerfläche 50 zu definieren und/oder offline Zustandsinformationen eines Pflanzenbestand zu erfassen.

Wobei offline im Kontext der Erfindung insbesondere umfasst, dass das Pflanzenbestimmungssystem nicht fest mit der Arbeitsmaschine 10, respektive dem Gestänge 24 verbunden ist, d.h. das bspw. eine Kamera oder ein Sensor nicht fest an der Arbeitsmaschine 10 oder dem Gestänge 24 angebaut ist. Vorzugsweise kann vorgesehen sein, dass die Datenverarbeitungseinrichtung 150 mit einem Pflanzenbestimmungssystem signalverbunden und/oder signalverbindbar ist, wobei das Pflanzenbestimmungssystem einem mobilen Endgerät, einem Flugobjekt 72 und/oder einem Planungssystem 70 zugeordnet ist oder dieses umfasst.

Obwohl die Erfindung unter Bezugnahme auf bestimmte Ausführungsbeispiele beschrieben worden ist, ist es für einen Fachmann ersichtlich, dass verschiedene Änderungen ausgeführt werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste:

| | | | |
|---|---|---|---|
| 10 | Landwirtschaftliche Arbeitsmaschine | 62 | Erste Sensoranordnung |
| 12 | Motoreinheit | 64 | Zweite Sensoranordnung |
| 14 | Fahrerkabine | | |
| 16 | Chassis | 70 | Planungssystem |
| 18 | Fahrwerk | 72 | Flugobjekt |
| 20 | Rahmenkonstruktion | 74 | Positionsbestimmungssystem |
| 22 | Vorratsbehälter | | |
| 24 | Gestänge; Verteilgestänge | 100 | System |
| 26 | Mittelteil | | |
| 28 | Seitenteile | 150 | Datenverarbeitungseinrichtung |
| 30 | Schwenkachse | | |
| 32 | Arbeitselemente; Verteilelement | FR | Fahrtrichtung |
| 34 | Stelleinrichtung | | |
| 36 | Trägerkonstruktion | A1 | Erster Abstand |
| 38 | Stellelement | A2 | Zweiter Abstand |
| | | A3 | Dritter Abstand |
| 40 | Referenzpunkt | A4 | Vierter Abstand |
| 50 | Bodenfläche, Ackerfläche | α | Schwenkwinkel |
| 52 | Pflanze | β | Höhenwinkel |
| 60 | Erfassungseinrichtung | | |

## Patentansprüche

1. System (100) für eine landwirtschaftliche Arbeitsmaschine (10) mit
- einem, Komponenten der Arbeitsmaschine (10) tragenden Chassis (16),
- einem, gegenüber dem Chassis (16) höhenverstellbar am Chassis (16) gelagerten und sich in einer Arbeitsbreite quer zur Fahrtrichtung (FR) erstreckenden Gestänge (24), vorzugsweise Verteilgestänge, mit einer Mehrzahl von an diesem beabstandet zueinander angeordneten Arbeitselementen (32),
- einer Datenverarbeitungseinrichtung (150),
- einer Erfassungseinrichtung (60), welche dazu eingerichtet ist, eine Schwenklage des Gestänges (24) in Fahrtrichtung (FR) gegenüber einem Referenzpunkt (40) zu erfassen, **dadurch gekennzeichnet, dass** die Datenverarbeitungseinrichtung (150) dazu eingerichtet ist, anhand der Schwenklage eine Position der Arbeitselemente (32) gegenüber dem Referenzpunkt (40) zu ermitteln.

2. System (100) nach Anspruch 1, wobei die Erfassungseinrichtung (60) ferner dazu eingerichtet ist, eine Höhenlage des Gestänges (24) gegenüber dem Referenzpunkt (40) zu erfassen und wobei die Datenverarbeitungseinrichtung (150) ferner dazu eingerichtet ist, anhand der Höhenlage und der Schwenklage eine Position der Arbeitselemente (32) gegenüber dem Referenzpunkt (40) zu ermitteln.

3. System (100), nach Anspruch 1 oder 2, **dadurch gekennzeichnet, dass** die Arbeitsmaschine (10) zum Verteilen von flüssigen und/oder festen landwirtschaftlichen Verteilgütern ausgebildet ist, vorzugsweise eine Feldspritze oder ein Düngerstreuer ist, wobei die Arbeitselemente (32) mit einem Vorratsbehälter (24) für mindestens ein landwirtschaftliches Verteilgut wirkverbunden und/oder wirkverbindbar sind und als Verteilelemente, vorzugsweise Spritzdüsen oder Prallelemente, ausgebildet sind.

4. System (100), nach einem der vorhergehenden Ansprüche, **dadurch gekennzeichnet, dass** die Datenverarbeitungseinrichtung (150) dazu eingerichtet ist, Anhand der Fahrzeuggeometrie und/oder der Gestängegeometrie und Anhand der Höhenlage und/oder der Schwenklage des Gestänges (24) eine Position der Arbeitselemente (32) gegenüber dem Referenzpunkt (40) zu ermitteln.

5. System (100), nach einem der vorhergehenden Ansprüche, **dadurch gekennzeichnet, dass** das Gestänge (24) ein Mittelteil (26) und links und rechts am Mittelteil (26), mittels Schwenkachsen (30) schwenkbar angeordnete Seitenteile (28) aufweist und wobei die Erfassungseinrichtung (60) eine zweite Sensoranordnung (64) aufweist welche dazu eingerichtet ist,
- eine Schwenklage in Fahrtrichtung (FR) der Seitenteile (28) gegenüber dem Mittelteil (26) zu erfassen und/oder
- eine Schwenklage in Fahrtrichtung (FR) des Mittelteils (26) gegenüber dem Chassis (16), vorzugsweise gegenüber der Trägerkonstruktion (36) des Gestänges (24), zu erfassen und/oder
- eine Schwenklage von zumindest zwei, ein Seitenteil (28) bildenden Segmenten zueinander zu erfassen,
- und dass die Datenverarbeitungseinrichtung (150) dazu eingerichtet ist, Anhand einer Schwenklage eine Position der Arbeitselemente (32) gegenüber dem Referenzpunkt (40), zu ermitteln.

6. System (100), nach einem der vorhergehenden Ansprüche, **dadurch gekennzeichnet, dass** die Erfassungseinrichtung (60) zur Erfassung einer Schwenklage eine zweite Sensoranordnung (64) aufweist, wobei die zweite Sensoranordnung (64) durch zumindest einen Winkelsensor gebildet ist, welcher gekoppelt ist,
- mit einem Seitenteil (28) und dem Mittelteil (26) und/oder
- mit dem Mittelteil (26) und dem Chassis (16), vorzugsweise der Trägerkonstruktion (36) des Gestänges (24), und/oder
- mit zwei, ein Seitenteil (28) bildenden Segmenten.

7. System (100), nach einem der vorhergehenden Ansprüche, **dadurch gekennzeichnet, dass** die Schwenklage des Gestänge (24) gegenüber dem Chassis (16), vorzugsweise gegenüber der Trägerkonstruktion (36) des Gestänge (24) und/oder der Seitenteile (28) gegenüber dem Mittelteil (26) und/oder der zumindest zwei ein Seitenteil (28) bildenden Segmente zueinander mittels jeweils einem Stellelement (38) veränderbar ist und dass die Erfassungseinrichtung (60) zur Erfassung einer Schwenklage eine zweite Sensoranordnung (64) aufweist, wobei die zweite Sensoranordnung (64) durch eine Wegmesssensorik und/oder eine Drucksensorik die mit dem Stellelement (38) gekoppelt ist, gebildet ist.

8. System (100), nach einem der vorhergehenden Ansprüche, **dadurch gekennzeichnet, dass** die Erfassungseinrichtung (60) zur Erfassung einer Höhenlage des Gestänges (24) eine erste Sensoranordnung (62) aufweist, wobei die erste Sensoranordnung (62) gebildet wird durch,
- zumindest einen, am Gestänge (24) angeordneten Abstandssensor und/oder
- durch einen Winkelsensor welcher mit dem Chassis (16) und der Trägerkonstruktion (36) des Gestänges (24) gekoppelt ist.

9. System (100), nach einem der vorhergehenden Ansprüche, **dadurch gekennzeichnet, dass** die Höhenlage des Gestänge (24) gegenüber dem Chassis (16) mittels einer Stelleinrichtung (34) veränderbar ist und dass die Erfassungseinrichtung (60) zur Erfassung einer Höhenlage des Gestänge (24) eine erste Sensoranordnung (62) aufweist, wobei die erste Sensoranordnung (62) durch eine Wegmesssensorik und/oder eine Drucksensorik die mit der Stelleinrichtung (34) gekoppelt ist, gebildet ist.

10. System (100), nach einem der vorhergehenden Ansprüche, **dadurch gekennzeichnet, dass** die Fahrzeuggeometrie und/oder die Gestängegeometrie durch zumindest einem von folgendem definiert ist,
- eine Spurweite und/oder
- einen Achsabstand und/oder
- einem Relativabstand der Räder gegenüber dem Chassis (16) und/oder
- einem ersten Abstand (A1) des Gestänges (24) zum Referenzpunkt (40) und/oder
- eine Breite des Gestänges (24) und/oder
- einem Abstand der Arbeitselemente (32) zueinander und/oder zum Referenzpunkt (40) und/oder
- eine Winkellage eines Zugfahrzeuges zu einer gezogenen Arbeitsmaschine (10).

11. System (100), nach einem der vorhergehenden Ansprüche, **dadurch gekennzeichnet, dass** die Datenverarbeitungseinrichtung (150) mit einem Positionsbestimmungssystem (74) signalverbunden und/oder signalverbindbar ist und dass die Datenverarbeitungseinrichtung (150) und/oder das Positionsbestimmungssystem (74) dazu eingerichtet ist, eine Position des Referenzpunkt (40), auf einer landwirtschaftlichen Ackerfläche (50) zu definieren.

12. System (100), nach einem der vorhergehenden Ansprüche, **dadurch gekennzeichnet, dass** die Datenverarbeitungseinrichtung (150) mit einem Pflanzenbestimmungssystem, welches dazu eingerichtet ist, Zustandsinformationen eines Pflanzenbestand auf einer Ackerfläche (50) zu erfassen, signalverbunden und/oder signalverbindbar ist und dass die Datenverarbeitungseinrichtung (150) dazu eingerichtet ist, Anhand einer Position der Arbeitselemente (32) und Anhand der mittels des Pflanzenbestimmungssystem erfassten Zustandsinformationen die Ausbringmenge an landwirtschaftlichem Verteilgut und/oder die Arbeitsweise einzelner, gruppierter oder sämtlicher Arbeitselemente (32) zu verändern.

13. System (100), nach einem der vorhergehenden Ansprüche, **dadurch gekennzeichnet, dass** die Datenverarbeitungseinrichtung (150) mit einem Pflanzenbestimmungssystem, welches dazu eingerichtet ist Positionen von Pflanzen (52) auf einer Ackerfläche (50) zu definieren, signalverbunden und/oder signalverbindbar ist, und dass die Datenverarbeitungseinrichtung (150) dazu eingerichtet ist, Anhand einer Position der Arbeitselemente (32) gegenüber dem Referenzpunkt (40), und Anhand der mittels des Pflanzenbestimmungssystem definierten Position von Pflanzen (52), insbesondere gegenüber dem Referenzpunkt (40), die Ausbringmenge an landwirtschaftlichem Verteilgut und/oder die Arbeitsweise einzelner, gruppierter oder sämtlicher Arbeitselemente (32) zu verändern.

14. System (100), nach einem der vorhergehenden Ansprüche, **dadurch gekennzeichnet, dass** die Datenverarbeitungseinrichtung (150) mit einem Pflanzenbestimmungssystem signalverbunden und/oder signalverbindbar ist, wobei das Pflanzenbestimmungssystem dazu eingerichtet ist, offline eine Position von Pflanzen (52) auf einer Ackerfläche (50) zu definieren und/oder offline Zustandsinformationen eines Pflanzenbestand zu erfassen, und/oder **dadurch gekennzeichnet, dass** die Datenverarbeitungseinrichtung (150) mit einem Pflanzenbestimmungssystem signalverbunden und/oder signalverbindbar ist, wobei das Pflanzenbestimmungssystem einem mobilen Endgerät, einem Flugobjekt (74) und/oder einem Planungssystem (70) zugeordnet ist oder dieses umfasst.

15. Verfahren zum Ermitteln einer Position von Arbeitselementen (32) an einer landwirtschaftlichen Arbeitsmaschine (10), **gekennzeichnet durch** die Schritte,
- Bereitstellen eines, Komponenten der Arbeitsmaschine (10) tragenden, Chassis (16),
- Bereitstellen eines, gegenüber dem Chassis (16) höhenverstellbar am Chassis (16) gelagerten und sich in einer Arbeitsbreite quer zur Fahrtrichtung (FR) erstreckenden Gestänge (24), mit einer Mehrzahl von an diesem beabstandet zueinander angeordneten Arbeitselementen (32),
- Bereitstellen einer Erfassungseinrichtung (60), welche dazu eingerichtet ist, eine Schwenklage des Gestänges (24) in Fahrtrichtung (FR) gegenüber einem Referenzpunkt (40) zu erfassen,
- Bereitstellen einer Datenverarbeitungseinrichtung (150),
- Ermitteln einer Position der Arbeitselemente (32) gegenüber dem Referenzpunkt (40), anhand der Schwenklage mittels der Datenverarbeitungseinrichtung (150).

16. Verfahren nach Anspruch 15, **dadurch gekennzeichnet, dass** die Datenverarbeitungseinrichtung (150) mit einem Positionsbestimmungssystem (74) signalverbunden und/oder signalverbindbar ist und dass die Datenverarbeitungseinrichtung (150) dazu eingerichtet ist, eine Position des Referenzpunkt (40) auf einer landwirtschaftlichen Ackerfläche (50) zu definieren und dass die Datenverarbeitungseinrichtung (150) mit einem Pflanzenbestimmungssystem, welches dazu eingerichtet ist Positionen von Pflanzen (52) auf einer Ackerfläche (50) zu definieren, signalverbunden und/oder signalverbindbar ist, und dass die Datenverarbeitungseinrichtung (150) dazu eingerichtet ist, Anhand einer Position der Arbeitselementen (32) gegenüber dem Referenzpunkt (40), und Anhand der mittels des Pflanzenbestimmungssystem (74) definierten Position von Pflanzen (52) gegenüber dem Referenzpunkt (40), die Ausbringmenge an landwirtschaftlichem Verteilgut und/oder die Arbeitsweise einzelner, gruppierter oder sämtlicher Arbeitselemente (32) zu verändern.

17. Landwirtschaftliche Arbeitsmaschine (10), vorzugsweise Feldspritze oder Düngerstreuer, mit
- einem, Komponenten der Arbeitsmaschine (10) tragenden Chassis (16),
- einem gegenüber dem Chassis (16) höhenverstellbar am Chassis (16) gelagerten Gestänge (24), welches ein Mittelteil (26) und links und rechts am Mittelteil (26) mittels Schwenkachsen (30) schwenkbar angeordnete Seitenteile (28) sowie eine Mehrzahl von an diesen beabstandet zueinander angeordneten Arbeitselementen (32) aufweist, **dadurch gekennzeichnet, dass** die Arbeitsmaschine (10) ein System (100) nach einem der Ansprüche 1 bis 14 umfasst und/oder dass die Arbeitsmaschine (10) dazu eingerichtet ist, ein Verfahren nach zumindest einem der Ansprüche 15 oder 16 auszuführen.

## Claims

1. System (100) for an agricultural working machine (10) with
- a chassis (16) carrying components of the working machine (10),
- a boom (24), preferably a distributor boom, which is mounted on the chassis (16) adjustably in height with respect to the chassis (16), extends in a working width transversely to the travelling direction (FR) and has a plurality of working elements (32) arranged on this boom at a distance from one another,
- a data processing device (150),
- a detecting device (60), which is set up to detect a pivoted position of the boom (24) in the travelling direction (FR) with respect to a reference point (40), **characterized in that** the data processing device (150) is set up to determine on the basis of the pivoted position a position of the working elements (32) with respect to the reference point (40).

2. System (100) according to Claim 1, wherein the detecting device (60) is also set up to detect a height position of the boom (24) with respect to the reference point (40) and wherein the data processing device (150) is also set up to determine on the basis of the height position and the pivoted position a position of the working elements (32) with respect to the reference point (40) .

3. System (100) according to Claim 1 or 2, **characterized in that** the working machine (10) is designed for distributing liquid and/or a solid agricultural products to be distributed, preferably a field sprayer or a fertilizer spreader, wherein the working elements (32) are operatively connected and/or can be operatively connected to a storage tank (24) for at least one agricultural product to be distributed and are formed as distributing elements, preferably spray nozzles or baffle elements.

4. System (100) according to one of the preceding claims, **characterized in that** the data processing device (150) is set up to determine on the basis of the geometry of the vehicle and/or the geometry of the boom and on the basis of the height position and/or the pivoted position of the boom (24) a position of the working elements (32) with respect to the reference point (40).

5. System (100) according to one of the preceding claims, **characterized in that** the boom (24) has a middle part (26) and side parts (28) arranged pivotably by means of pivot pins (30) to the left and right on the middle part (26) and wherein the detecting device (60) has a second sensor arrangement (64), which is set up to detect
- a pivoted position in the travelling direction (FR) of the side parts (28) with respect to the middle part (26) and/or
- a pivoted position in the travelling direction (FR) of the middle part (26) with respect to the chassis (16), preferably with respect to the carrier construction (36) of the boom (24), and/or
- a pivoted position of at least two segments, forming a side part (28), in relation to one another,
- and **in that** the data processing device (150) is set up to determine on the basis of a pivoted position a position of the working elements (32) with respect to the reference point (40).

6. System (100) according to one of the preceding claims, **characterized in that** the detecting device (60) has for detecting a pivoted position a second sensor arrangement (64), wherein the second sensor arrangement (64) is formed by at least one angle sensor, which is coupled
- to one side part (28) and the middle part (26) and/or
- to the middle part (26) and the chassis (16), preferably the carrier construction (36) of the boom (24), and/or
- to two segments forming a side part (28).

7. System (100) according to one of the preceding claims, **characterized in that** the pivoted position of the boom (24) with respect to the chassis (16), preferably with respect to the carrier construction (36) of the boom (24), and/or of the side parts (28) with respect to the middle part (26) and/or of the at least two segments forming a side part (28) can be changed in relation to one another by means of in each case an adjusting element (38) and **in that** the detecting device (60) has for detecting a pivoted position a second sensor arrangement (64), wherein the second sensor arrangement (64) is formed by a displacement-measuring sensor system and/or a pressure sensor system which is coupled to the adjusting element (38).

8. System (100) according to one of the preceding claims, **characterized in that** the detecting device (60) has for detecting a height position of the boom (24) a first sensor arrangement (62), wherein the first sensor arrangement (62) is formed by
- at least one distance sensor arranged on the boom (24) and/or
- an angle sensor, which is coupled to the chassis (16) and the carrier construction (36) of the boom (24).

9. System (100) according to one of the preceding claims, **characterized in that** the height position of the boom (24) with respect to the chassis (16) can be changed by means of an adjusting device (34) and **in that** the detecting device (60) has for detecting a height position of the boom (24) a first sensor arrangement (62), wherein the first sensor arrangement (62) is formed by a displacement-measuring sensor system and/or a pressure sensor system which is coupled to the adjusting device (34) .

10. System (100) according to one of the preceding claims, **characterized in that** the geometry of the vehicle and/or the geometry of the boom is defined by at least one of the following,
- a track width and/or
- a wheelbase and/or
- a relative distance of the wheels with respect to the chassis (16) and/or
- a first distance (A1) of the boom (24) in relation to the reference point (40) and/or
- a width of the boom (24) and/or
- a distance of the working elements (32) in relation to one another and/or in relation to the reference point (40) and/or
- an angular position of a towing vehicle in relation to a towed working machine (10).

11. System (100) according to one of the preceding claims, **characterized in that** the data processing device (150) is signal-connected and/or can be signal-connected to a position determining system (74) and **in that** the data processing device (150) and/or the position determining system (74) is set up to define a position of the reference point (40) in an agricultural field (50) .

12. System (100) according to one of the preceding claims, **characterized in that** the data processing device (150) is signal-connected and/or can be signal-connected to a crop determining system, which is set up to detect information on the state of crops in a field (50) and **in that** the data processing device (150) is set up to change the discharge quantity of agricultural products to be distributed and/or the operating manner of individual, groups of or all of the working elements (32) on the basis of a position of the working elements (32) and on the basis of the information on the state detected by means of the crop determining system.

13. System (100) according to one of the preceding claims, **characterized in that** the data processing device (150) is signal-connected and/or can be signal-connected to a crop determining system, which is set up to define positions of crops (52) in a field (50), and **in that** the data processing device (150) is set up to change the discharge quantity of agricultural products to be distributed and/or the operating manner of individual, groups of or all of the working elements (32) on the basis of a position of the working elements (32) with respect to the reference point (40) and on the basis of the position of crops (52) defined by means of the crop determining system, in particular with respect to the reference point (40).

14. System (100) according to one of the preceding claims, **characterized in that** the data processing device (150) is signal-connected and/or can be signal-connected to a crop determining system, wherein the crop determining system is set up to define a position of crops (52) in a field (50) off-line and/or to detect information on the state of crops off-line and/or **characterized in that** the data processing device (150) is signal-connected and/or can be signal-connected to a crop determining system, wherein the crop determining system is assigned to or comprises a mobile terminal, a flying object (74) and/or a planning system (70).

15. Method for determining a position of working elements (32) on an agricultural working machine (10), **characterized by** the steps of
- providing a chassis (16), carrying components of the working machine (10),
- providing a boom (24), which is mounted on the chassis (16) adjustably in height with respect to the chassis (16), extends in a working width transversely to the travelling direction (FR) and has a plurality of working elements (32) arranged on this boom at a distance from one another,
- providing a detecting device (60), which is set up to detect a pivoted position of the boom (24) in the travelling direction (FR) with respect to a reference point (40),
- providing a data processing device (150),
- determining a position of the working elements (32) with respect to the reference point (40) on the basis of the pivoted position by means of the data processing device (150).

16. Method according to Claim 15, **characterized in that** the data processing device (150) is signal-connected and/or can be signal-connected to a position determining system (74) and **in that** the data processing device (150) is set up to define a position of the reference point (40) in an agricultural field (50) and **in that** the data processing device (150) is signal-connected and/or can be signal-connected to a crop determining system, which is set up to define positions of crops (52) in a field (50), and **in that** the data processing device (150) is set up to change the discharge quantity of agricultural products to be distributed and/or the operating manner of individual, groups of or all of the working elements (32) on the basis of a position of the working elements (32) with respect to the reference point (40) and on the basis of the position of crops (52) defined by means of the crop determining system (74) with respect to the reference point (40).

17. Agricultural working machine (10), preferably a field sprayer or fertilizer spreader, with
- a chassis (16) carrying components of the working machine (10),
- a boom (24), which is mounted on the chassis (16) adjustably in height with respect to the chassis (16), has a middle part (26) and side parts (28) arranged pivotably by means of pivot pins (30) to the left and right on the middle part (26) and also a plurality of working elements (32) arranged on this boom at a distance from one another, **characterized in that** the working machine (10) comprises a system (100) according to one of Claims 1 to 14 and/or **in that** the working machine (10) is set up to perform a method according to at least one of Claims 15 or 16.

## Revendications

1. Système (100) pour une machine de travail agricole (10) comprenant
- un châssis (16) portant des composants de la machine de travail (10),
- une tringlerie (24), de préférence une tringlerie de distribution, montée sur le châssis (16) de manière à pouvoir être réglée en hauteur par rapport au châssis (16) et s'étendant sur une largeur de travail transversalement à la direction de déplacement (FR), comportant une pluralité d'éléments de travail (32) disposés sur celle-ci de manière espacée les uns des autres,
- un dispositif de traitement de données (150),
- un dispositif de détection (60) qui est conçu pour détecter une position de pivotement de la tringlerie (24) dans la direction de déplacement (FR) par rapport à un point de référence (40), **caractérisé en ce que** le dispositif de traitement de données (150) est conçu pour déterminer, sur la base de la position de pivotement, une position des éléments de travail (32) par rapport au point de référence (40).

2. Système (100) selon la revendication 1, dans lequel le dispositif de détection (60) est en outre conçu pour détecter une position en hauteur de la tringlerie (24) par rapport au point de référence (40), et dans lequel le dispositif de traitement de données (150) est en outre conçu pour déterminer, sur la base de la position en hauteur et de la position de pivotement, une position des éléments de travail (32) par rapport au point de référence (40).

3. Système (100) selon la revendication 1 ou 2, **caractérisé en ce que** la machine de travail (10) est conçue pour distribuer des produits agricoles liquides et/ou solides, et est de préférence un pulvérisateur agricole ou un épandeur d'engrais, les éléments de travail (32) étant en liaison active et/ou pouvant être en liaison active avec un réservoir de stockage (24) destiné à au moins un produit agricole à distribuer et étant conçus sous la forme d'éléments de distribution, de préférence des buses de pulvérisation ou des éléments d'impact.

4. Système (100) selon l'une des revendications précédentes, **caractérisé en ce que** le dispositif de traitement de données (150) est conçu pour déterminer, sur la base de la géométrie du véhicule et/ou de la géométrie de la tringlerie et sur la base de la position en hauteur et/ou de la position de pivotement de la tringlerie (24), une position des éléments de travail (32) par rapport au point de référence (40).

5. Système (100) selon l'une des revendications précédentes, **caractérisé en ce que** la tringlerie (24) présente une partie centrale (26) et des parties latérales (28) disposées à gauche et à droite de la partie centrale (26), pouvant pivoter au moyen d'axes de pivotement (30) et le dispositif de détection (60) comprenant un deuxième ensemble capteur (64) qui est conçu pour
- détecter une position de pivotement dans la direction de déplacement (FR) des parties latérales (28) par rapport à la partie centrale (26) et/ou
- détecter une position de pivotement dans la direction de déplacement (FR) de la partie centrale (26) par rapport au châssis (16), de préférence par rapport à la structure de support (36) de la tringlerie (24), et/ou
- détecter une position de pivotement l'un par rapport à l'autre d'au moins deux segments formant une partie latérale (28),
- et **en ce que** le dispositif de traitement de données (150) est conçu pour déterminer, sur la base d'une position de pivotement, une position des éléments de travail (32) par rapport au point de référence (40).

6. Système (100) selon l'une des revendications précédentes, **caractérisé en ce que** le dispositif de détection (60) comporte un deuxième ensemble capteur (64) destiné à détecter une position de pivotement, le deuxième ensemble capteur (64) étant formé par au moins un capteur angulaire qui est couplé
- à une partie latérale (28) et à la partie centrale (26) et/ou
- à la partie centrale (26) et au châssis (16), de préférence à la structure porteuse (36) de la tringlerie (24), et/ou
- à deux segments formant une partie latérale (28).

7. Système (100) selon l'une des revendications précédentes, **caractérisé en ce que** les positions de pivotement de la tringlerie (24) par rapport au châssis (16), de préférence par rapport à la structure porteuse (36) de la tringlerie (24) et/ou des parties latérales (28) par rapport à la partie centrale (26) et/ou desdits au moins deux segments formant une partie latérale (28) peuvent être modifiées les unes par rapport aux autres au moyen d'un élément de réglage (38) respectif et **en ce que** le dispositif de détection (60) comporte un deuxième ensemble capteur (64) destiné à détecter une position de pivotement, le deuxième ensemble capteur (64) étant formé par un capteur de mesure de déplacement et/ou un capteur de pression qui est couplé à l'élément de réglage (38).

8. Système (100) selon l'une des revendications précédentes, **caractérisé en ce que** le dispositif de détection (60) comporte un premier ensemble capteur (62) destiné à détecter une position en hauteur de la tringlerie (24), le premier ensemble capteur (62) étant formé par
- au moins un capteur de distance disposé sur la tringlerie (24) et/ou
- un capteur angulaire qui est couplé au châssis (16) et à la structure de support (36) de la tringlerie (24).

9. Système (100) selon l'une des revendications précédentes, **caractérisé en ce que** la position en hauteur de la tringlerie (24) par rapport au châssis (16) peut être modifiée au moyen d'un dispositif de réglage (34) et **en ce que** le dispositif de détection (60) comporte un premier ensemble capteur (62) destiné à détecter une position en hauteur de la tringlerie (24), le premier ensemble capteur (62) étant formé par un capteur de mesure de déplacement et/ou un capteur de pression qui est couplé au dispositif de réglage (34).

10. Système (100) selon l'une des revendications précédentes, **caractérisé en ce que** la géométrie du véhicule et/ou la géométrie de la tringlerie est définie par au moins l'un
- d'un écartement de voie et/ou
- d'un empattement et/ou
- d'une distance relative des roues par rapport au châssis (16) et/ou
- d'une première distance (A1) de la tringlerie (24) par rapport au point de référence (40) et/ou
- d'une largeur de la tringlerie (24) et/ou
- d'une distance des éléments de travail (32) les uns par rapport aux autres et/ou par rapport au point de référence (40) et/ou
- d'une position angulaire d'un véhicule tracteur par rapport à une machine de travail tractée (10).

11. Système (100) selon l'une des revendications précédentes, **caractérisé en ce que** le dispositif de traitement de données (150) est relié par signaux et/ou peut être relié par signaux à un système de détermination de position (74) et **en ce que** le dispositif de traitement de données (150) et/ou le système de détermination de position (74) est conçu pour définir une position du point de référence (40) sur une surface arable agricole (50) .

12. Système (100) selon l'une des revendications précédentes, **caractérisé en ce que** le dispositif de traitement de données (150) est relié par signaux et/ou peut être relié par signaux à un système de détermination de plantes qui est conçu pour détecter des informations d'état d'une végétation sur une surface arable (50), et **en ce que** le dispositif de traitement de données (150) est conçu pour modifier, sur la base d'une position des éléments de travail (32) et sur la base des informations d'état détectées au moyen du système de détermination de plantes, la quantité de produit agricole à distribuer et/ou le mode de fonctionnement d'éléments de travail (32) individuels, regroupés ou dans leur totalité.

13. Système (100) selon l'une des revendications précédentes, **caractérisé en ce que** le dispositif de traitement de données (150) est relié par signaux et/ou peut être relié par signaux à un système de détermination de plantes qui est conçu pour définir des positions de plantes (52) sur une surface arable (50), et **en ce que** le dispositif de traitement de données (150) est conçu pour modifier, sur la base d'une position des éléments de travail (32) par rapport au point de référence (40) et sur la base de la position de plantes (52) définie au moyen du système de détermination de plantes, en particulier par rapport au point de référence (40), la quantité de produit agricole à distribuer et/ou le mode de fonctionnement d'éléments de travail (32) individuels, regroupés ou dans leur totalité.

14. Système (100) selon l'une des revendications précédentes, **caractérisé en ce que** le dispositif de traitement de données (150) est relié par signaux et/ou peut être relié par signaux à un système de détermination de plantes, le système de détermination de plantes étant conçu pour définir hors ligne une position de plantes (52) sur une surface arable (50) et/ou pour détecter hors ligne des informations d'état d'une végétation, et/ou **caractérisé en ce que** le dispositif de traitement de données (150) est relié par signaux et/ou peut être relié par signaux à un système de détermination de plantes, le système de détermination de plantes étant associé à ou comprenant un terminal mobile, un objet volant (74) et/ou un système de planification (70).

15. Procédé pour déterminer une position d'éléments de travail (32) sur une machine de travail agricole (10), **caractérisé par** les étapes suivantes :
- fournir un châssis (16) portant des composants de la machine de travail (10),
- fournir une tringlerie (24) montée sur le châssis (16) de manière réglable en hauteur par rapport au châssis (16) et s'étendant sur une largeur de travail transversalement à la direction de déplacement (FR), comportant une pluralité d'éléments de travail (32) disposés sur celle-ci de manière espacée les uns des autres,
- fournir un dispositif de détection (60) qui est conçu pour détecter une position de pivotement de la tringlerie (24) dans la direction de déplacement (FR) par rapport à un point de référence (40),
- fournir un dispositif de traitement de données (150),
- déterminer une position des éléments de travail (32) par rapport au point de référence (40) sur la base de la position de pivotement au moyen du dispositif de traitement de données (150).

16. Procédé selon la revendication 15, **caractérisé en ce que** le dispositif de traitement de données (150) est relié par signaux et/ou peut être relié par signaux à un système de détermination de position (74) et **en ce que** le dispositif de traitement de données (150) est conçu pour définir une position du point de référence (40) sur une surface arable agricole (50) et **en ce que** le dispositif de traitement de données (150) est relié par signaux et/ou peut être relié par signaux à un système de détermination de plantes qui est conçu pour définir des positions de plantes (52) sur une surface arable (50), et **en ce que** le dispositif de traitement de données (150) est conçu pour modifier, sur la base d'une position des éléments de travail (32) par rapport au point de référence (40), et sur la base de la position de plantes (52) définie au moyen du système de détermination de plantes (74) par rapport au point de référence (40), la quantité à épandre de produit agricole à distribuer et/ou le mode de fonctionnement d'éléments de travail (32) individuels, regroupés ou dans leur totalité.

17. Machine de travail agricole (10), de préférence pulvérisateur ou épandeur d'engrais, comprenant
- un châssis (16) portant des composants de la machine de travail (10),
- une tringlerie (24) montée sur le châssis (16) de manière réglable en hauteur par rapport au châssis (16), qui présente une partie centrale (26) et des parties latérales (28) disposées à gauche et à droite de la partie centrale (26), pouvant pivoter au moyen d'axes de pivotement (30), ainsi qu'une pluralité d'éléments de travail (32) disposés sur ceux-ci de manière espacée les uns des autres, **caractérisée en ce que** la machine de travail (10) comprend un système (100) selon l'une des revendications 1 à 14 et/ou **en ce que** la machine de travail (10) est conçue pour mettre en œuvre un procédé selon au moins l'une des revendications 15 ou 16.
